(19) Europäisches Patentamt / European Patent Office / Office européen des brevets

(11) **EP 3 311 993 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(51) Int Cl.:
**B29D 11/00** *(2006.01)* **G02C 7/02** *(2006.01)*
**G02C 7/06** *(2006.01)* **B33Y 10/00** *(2015.01)*

(21) Anmeldenummer: **16194893.0**

(22) Anmeldetag: **20.10.2016**

(54) **BRILLENGLAS UND VERFAHREN ZU DESSEN HERSTELLUNG**

SPECTACLE GLASS AND METHOD FOR ITS PRODUCTION

VERRE DE LUNETTE ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.04.2018 Patentblatt 2018/17**

(73) Patentinhaber: **Carl Zeiss Vision International GmbH**
**73430 Aalen (DE)**

(72) Erfinder: **Glöge, Thomas**
**73434 Aalen (DE)**

(74) Vertreter: **Carl Zeiss AG - Patentabteilung**
**Carl-Zeiss-Strasse 22**
**73447 Oberkochen (DE)**

(56) Entgegenhaltungen:
**JP-A- H05 313 107      JP-A- 2004 157 487**
**US-A1- 2005 046 957    US-A1- 2015 153 589**
**US-A1- 2016 167 299    US-B1- 9 086 569**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Brillenglas nach dem Oberbegriff des Patentanspruchs 1 sowie ein computerimplementiertes Verfahren zum Auslegen eines Brillenglases nach dem Oberbegriff des Patentanspruchs 13.

Brillengläser sind aus dem Stand der Technik in vielen Variationen bekannt. Es gibt Brillengläser ohne nominelle dioptrische Wirkung und Korrektions-Brillengläser, also Brillengläser mit dioptrischer Wirkung. Dioptrische Wirkung ist nach der DIN EN ISO 13666, Abschnitt 9.3 der Sammelbegriff für die fokussierende und die prismatische Wirkung eines Brillenglases.

Bei Korrektions-Brillengläsern unterscheidet man zwischen Einstärken-Brillengläsern und Multifokal-Brillengläsern. Ein Einstärken-Brillenglas ist ein Brillenglas, bei dem von der Konstruktion her nur eine dioptrische Wirkung vorhanden ist. Ein Mehrstärken-Brillenglas ist ein Brillenglas, bei dem von der Konstruktion her zwei oder mehr sichtbar verschiedene Teile mit unterschiedlichen fokussierenden Wirkungen vorhanden sind. Von Bedeutung sind insbesondere Zweistärken- oder Bifokal-Brillengläser, nämlich Mehrstärken-Brillengläser mit zwei Teilen, üblicherweise für das Sehen in die Ferne und die Nähe, sowie Gleitsicht-Brillengläser, nämlich Brillengläser mit mindestens einer Gleitsichtfläche und einer zunehmenden (positiven) Wirkung, wenn der Brillenträger nach unten blickt. Selten sind degressive Brillengläser, also solche mit mindestens einer Gleitsichtfläche und einer abnehmenden Wirkung (d. h. einer Abschwächung der Wirkung), wenn der Brillenträger nach unten blickt.

Welche Form das Brillenglas erhalten muss, um die gewünschte optische Korrektur zu erhalten, wird maßgeblich von dessen Werkstoff bestimmt. Wichtigster Parameter ist hierbei der Brechungsindex des Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich. Derartige Grundmaterialien für organische Brillengläser werden u.a. unter den Handelsbezeichnungen CR 39, MR 8, MR 7, CR 330 sowie MR 174 angeboten. Eine Auswahl solcher Grundmaterialien findet sich auch in der Veröffentlichungsschrift EP 2692941 A1. Laufend werden andere Werkstoffe auf deren Eignung für organische Brillengläser getestet und entwickelt. Die folgende Tabelle 1 veranschaulicht Kenngrößen sowie Bezugsgrößen einer Auswahl an bekannten Grundmaterialien.

Tabelle 1: Grundmaterialien für die Herstellung von Brillengläsern

| Handelsname | Grundmaterial | Brechungsindex $n_e$ | Abbe-Zahl $v_e$ |
|---|---|---|---|
| | Poly(methylmethacrylat) PMMA | 1.4896 | 58 |
| RAV 700 | Polyallyldiglycolcarbonat PADC | 1.49 | 59 |
| CR 39 CR 330 CR 607 CR 630 | Polyallyldiglykolcarbonat PADC | 1.500 | 56 |
| RAVolution | Polyharnstoff / Polyurethan PU | 1.50 | 54 |
| Trivex | Polyharnstoff / Polyurethan PU | 1.530 | 45 |
| Luxexcel Printoptical | Polyacrylat | 1.53 | 44 |
| SOLA Spectralite | Polyacrylat | 1.54 | 47 |
| | Polyethylenterephthalat PET | 1.58 | 39 |
| | Polycarbonat PC | 1.590 | 29 |
| MR 6 | Polythiourethan PTU | 1.598 | |
| MR 8 | Polythiourethan PTU | 1.598 | 41 |

(fortgesetzt)

| Handelsname | Grundmaterial | Brechungsindex $n_e$ | Abbe-Zahl $v_e$ |
|---|---|---|---|
| MR 7 | Polythiourethan PTU | 1.664 | 32 |
| MR 10 | Polythiourethan PTU | 1.666 | 32 |
| MR 174 | Polyepisulfid | 1.738 | 32 |
| MGC 1.76 | Polyepisulfid | 1.76 | 30 |
| | Mineral 1.5 | 1.525 | 58 |
| | Mineral 1.6 | 1.604 | 44 |

Derzeit werden eine große Anzahl an organischen Brillenglas-Halbfertigfabrikaten oder Brillenglas-Fertigfabrikaten mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in den Dokumenten DE 30 07 572 C2, US 6,103,148 A oder JP 2008 191186 A beschrieben ist. Dies gilt für Grundmaterialien mit den Handelsbezeichnungen MR 7, MR 8, MR 10 sowie CR 39, CR 607, CR 630 und weitere. Bei den Grundmaterialien mit den Handelsbezeichnungen MR 7, MR 8 und MR 10 handelt es ich um Polythiourethane, die von der Firma Mitsui Chemicals vertrieben werden. Die Abkürzung "MR" steht dabei für Mitsui Resin. CR 39 oder Columbia Resin 39 ist die von der Firma Pittsburgh Plate Glass Industries (PPG Industries) gewählte Marke, unter der der Werkstoff Polydiethylenglycolbisallylcarbonat bzw. Polyallyldiglycolcarbonat (Abkürzung: PADC) vertrieben wird. Hierbei handelt es sich um einen duroplastischen Polymerwerkstoff. CR 607 und CR 630 stammen ebenfalls von der Firma PPG.

Halbfertigfabrikate oder Fertigfabrikate für Brillengläser aus Polycarbonat werden im Allgemeinen in Metallformen mittels Spritzgusstechnik erzeugt. Dieses Herstellverfahren ist z.B. in der EP 0955147 A1 beschrieben. Unter Halbfabrikat versteht man einen Brillenglasrohling mit einer fertig bearbeiteten Fläche entsprechend Abschnitt 8.4.2 der DIN EN ISO 13666:2013-10, deren Form in weiteren Produktionsschritten nicht mehr verändert wird. Die gegenüberliegende Fläche eines Halbfabrikats erhält ihre finale Form in der Regel mittels eines materialabtragenden Verfahrens. Ein Fertigfabrikat ist ein Brillenglasrohling, bei dem beide Flächen bereits ihre endgültige Form erhalten haben. Dieses Fertigfabrikat (siehe Abschnitt 8.4.6 der DIN EN ISO 13666:2013-10) wird durch zwei optische Flächen definiert, die je nach optischer Wirkung und Material (Brechungsindex) unterschiedliche Abstände und ggf. Orientierung zueinander haben. Die Flächen sind als Folge des Fertigungsverfahrens, im Falle von Progressivbrillengläsern oder hochwertigen Einstärkenbrillengläsern wird ein sogenanntes Freiform-Fertigungsverfahren angewandt, stetig und der Brechungsindex ist homogen im gesamten Brillenglas.

Mineralische Brillengläser werden regelmäßig durch maschinelle mechanisch abrasive Bearbeitung eines Rohlings erzeugt.

Auftragsspezifische Rezeptbrillengläser, d.h. insbesondere individualisierte Einstärken- und Mehrstärkengläser, deren optische Eigenschaften wenigstens teilweise nicht vorauswählbar standardisiert sind, sondern in Bezug auf deren Maß und/oder deren Anordnung auf dem Brillenglas auf den Benutzer angepasst individuell berechnet und gefertigt werden, und im Besonderen Gleitsicht- bzw. Progressivgläser werden durch mechanische, insbesondere deformierende und/oder abrasive, Verfahren in ihre finale Form gebracht. Hierbei können die Außenformen rund, oval oder willkürlich, sogenannte Freiformen beschreibend, ausgebildet sein.

Die vorstehend beschriebenen Halbfertig- oder Fertigfabrikate werden häufig einem oder mehreren Veredelungsprozessen unterzogen. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund der Eigenschaften des Grund- oder Trägermaterials, auf das die Funktionsschichten ggf. appliziert werden, und der Formgebung nicht hätten. Derartige vorteilhafte Eigenschaften sind neben optischen Eigenschaften wie z.B. Entspiegelung, Verspiegelung, Lichtpolarisierung, Färbung, Selbsttönung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften. Beispiele für Funktionsbeschichtungen entnimmt man z.B. den Dokumenten WO 10/109154 A1, WO 01/55752 A1 und DE 10 2008 041 869 A1.

Es ist allgemein bekannt, dass ein Brillenglas aufgrund der Wellenlängenabhängigkeit des Brechungsindexes des optischen Materials, aus dem es gefertigt ist, Farbfehler hervorruft, wenn das Brillenglas aus nur einem Linsenelement gefertigt ist. Zu den Farbfehlern gehört der Farblängsfehler, der unterschiedliche Foki für unterschiedliche Wellenlängen des Lichts erzeugt. Dieser wird auch als Achsenabweichung oder longitudinale chromatische Aberration bezeichnet. Neben dem Farblängsfehler tritt als weiterer Farbfehler der Farbquerfehler auf, der sich durch Farbsäume bzw. Farbränder in der Bildebene, im Fall eines Brillenglases auf der Netzhaut des Auges, äußert, die der Brillenträger wahrnimmt und ab einer gewissen Stärke als störend empfindet. Der Farbquerfehler wird auch als Farbvergrößerungsfehler oder transversale chromatische Aberration bezeichnet.

Eine Abschätzung für die Breite des entstehenden Farbsaums bzw. der Farbquerfehler kann nach gängiger Fachliteratur, etwa Diepes/Blendowske, "Optik und Technik der Brille", Optische Fachveröffentlichung GmbH, Heidelberg, Deutschland, 2005, Kapitel 5.3, mit der Formel:

$$\Delta\delta_{chrom} = \frac{\delta_e}{\nu_e}$$

angegeben werden, wobei $\Delta\delta_{chrom}$ eine Breite des Farbsaums in $\frac{cm}{m}$ ist, die proportional zu einer prismatischen Wirkung $\delta_e$ an der untersuchten Stelle und zu dem Kehrwert der Abbe-Zahl $\nu_e$ des untersuchten Materials ist. Dabei sind die prismatische Wirkung und die Abbe-Zahl auf dieselbe Wellenlänge bezogen, in obiger Formel auf die Quecksilber e-Linie, d. h. eine Wellenlänge von 546,074 nm.

Die Abbe-Zahl $\nu_e$, auch Abbesche Zahl, ist eine dimensionslose Größe zur Charakterisierung der optischen dispersiven Eigenschaften von optischen Gläsern, also wie stark sich deren Brechungsindex mit der Lichtwellenlänge ändert. Je größer die Dispersion (siehe Abschnitt 4.6 in der DIN EN ISO 13666:2013-10) des Glases, desto kleiner die Abbe-Zahl. Die Abbe-Zahl ist nach dem deutschen Physiker Ernst Abbe benannt. Die Abbe-Zahl $\nu_e$ ist definiert als:

$$\nu_e = \frac{n_e - 1}{n_{F'} - n_{C'}}$$

wobei $n_e$, $n_{F'}$ und $n_{C'}$ die Brechungsindices des Materials bei den Wellenlängen der entsprechenden Fraunhoferlinien, nämlich die Quecksilber e-Linie bei 546,07 nm, die Cadmium F'-Linie bei 479,99 nm und die Cadmium C'-Linie bei 643,85 nm (entsprechend der Norm ISO 7944), sind (siehe Abschnitt 4.7 in der DIN EN ISO 13666:2013-10).

Bei Brillengläsern mit geringer Stärke macht sich der Farbquerfehler für den Brillenträger nicht störend bemerkbar. Allerdings nehmen die Farbfehler, insbesondere der Farbquerfehler, bei Brillengläsern mit zunehmender prismatischer Wirkung zu. Des Weiteren können Brillengläser, auch wenn das eingeschliffene Rezept keine prismatische Korrektion aufweist, dennoch Farbquerfehler aufgrund prismatischer Nebenwirkungen nach der Prentice-Regel bei großen Blickwinkeln aufweisen, egal ob die zu korrigierende Fehlsichtigkeit auf Kurzsichtigkeit oder Weitsichtigkeit beruht.

Heutzutage werden oft hochbrechende Materialien, insbesondere Kunststoffe oder hochbrechende Glassorten verwendet, um die Brillenglasdicke aus kosmetischen Gründen so dünn wie möglich zu halten. Aber gerade bei Materialien mit einem hohen Brechungsindex wird auch der Farbquerfehler deutlich stärker, weil allgemein mit zunehmendem Brechungsindex eine geringere Abbe-Zahl einhergeht. Insbesondere aber auch die wegen ihrer Bruchfestigkeit bevorzugten aber vergleichsweise niedrig brechenden Polycarbonat-Brillengläser bewirken wegen ihrer vergleichsweise kleinen Abbe-Zahl $\nu_e$ von 29 für den Betrachter einen störenden Farbsaum. Darüber hinaus reduzieren sie den Kontrast und verschlechtern damit die Sicht auf die Welt im Vergleich zu Menschen ohne Brille.

Unter einem "störenden Farbquerfehler" wird im Rahmen der vorliegenden Erfindung ein Grenzwert für den Farbquerfehler $\Delta\delta_{chrom}$ verstanden, der von einem Brillenträger als störend empfunden wird. Dieser Grenzwert ist zwar individuell verschieden, ein Richtwert ist aber ein Farbquerfehler $\Delta\delta_{chrom}$ größer als 0,25cm/m. Daher ist es wünschenswert, den Farbquerfehler, der durch ein Brillenglas erzeugt wird, zumindest abzuschwächen.

Auf dem Gebiet der Objektive, beispielsweise für Kameras, ist es bekannt, Farbfehler durch sog. Achromaten zu korrigieren. Unter einem Achromat wird in der Optik ein System aus zumindest zwei Linsen verstanden, die aus Materialien mit unterschiedlicher Abbe-Zahl und/oder unterschiedlichem Brechungsindex und somit unterschiedlichem Dispersionsverhalten, bestehen. Von den beiden Linsen ist die eine Linse eine Sammellinse, die üblicherweise aus einem Material höherer Abbe-Zahl, beispielsweise Kronglas, gefertigt ist, und die andere Linse ist eine Zerstreuungslinse aus einem Material mit kleinerer Abbe-Zahl und somit stärkerer Dispersion als die Sammellinse, wobei diese Linse beispielsweise aus Flintglas gefertigt ist.

Die beiden Linsen sind so geformt und an zueinander komplementären Flächen miteinander verbunden, dass der Farbfehler für zwei Wellenlängen so gut wie möglich aufgehoben ist. Die beiden Linsen wirken dann achromatisch zusammen. So hat beispielsweise ein Achromat aus zwei dünnen Linsen, die einen kleinen Abstand voneinander haben, für die Fraunhoferschen Linien F' und C' die gleiche Brennweite, wenn

$$\nu_1 f_1 + \nu_2 f_2 = 0$$

ist, wobei $\nu_i$ die Abbe-Zahlen und $f_i$ die Brennweiten der beiden Linsen sind.

Unter "zumindest teilweise achromatisch miteinander zusammenwirken" bzw. "achromatisch zusammenwirken" wird im Sinne der vorliegenden Erfindung verstanden, dass der Farbquerfehler oder die Farbfehler nicht unbedingt vollständig eliminiert wird bzw. werden, sondern zumindest abgeschwächt wird bzw. werden. Ein Maß für "zumindest teilweise achromatisch miteinander zusammenwirken" bzw. "achromatisch zusammenwirken" ist demnach der Quotient aus dem Farbquerfehler $\Delta\delta_{chrom}$ eines Brillenglases aus einem einheitlichen Material ohne achromatische Korrektur und dem Farbquerfehler $\Delta\delta_{chrom}$ des entsprechenden Brillenglases gleicher dioptrischer Wirkungsverteilung mit achromatischer Korrektur am gleichen vorgegebenen Ort.

Der beim Achromat noch verbleibende Farbfehler (das sogenannte sekundäre Spektrum) äußert sich oft in einem violetten Saum um helle Objekte. Um den Farbfehler noch weiter zu reduzieren, muss der Brechungsindex bei mehr als zwei Wellenlängen berücksichtigt werden (wenn das Licht bei drei Wellenlängen auf einen Punkt abgebildet wird, hat man einen Apochromat). Trotzdem hilft auch hier die Abbe-Zahl, um Glassorten grob zu klassifizieren.

Eine anschauliche Zusammenfassung der Funktionsweise von Achromat und Apochromat entnimmt man Volker Witt, "Wie funktionieren Achromat und Apochromat? Teil 1: Von der Einzellinse zum Achromaten", Sterne und Weltraum, Oktober 2005, Seiten 72 bis 75 sowie Volker Witt, "Wie funktionieren Achromat und Apochromat? Teil 2: Vom Achromaten zum Apochromaten", Sterne und Weltraum, Dezember 2005, Seiten 76 bis 79.

Die zuvor beschriebenen herkömmlichen Achromate sind zur Verwendung als Brillengläser nicht geeignet. Da diese Achromaten nämlich aus zwei vollständigen Linsen zusammengesetzt sind, besitzen sie auch eine entsprechende Dicke und damit einhergehend ein zu hohes Gewicht.

Das in der Druckschrift GB 487 546 A offenbarte Brillenglas besteht aus zwei Linsenelementen, die im Wesentlichen den gleichen Brechungsindex aufweisen. Das eine Linsenelement ist aus Flintglas mit einem Brechungsindex von etwa 1,61 und einer reziproken relativen Dispersion von etwa 36 gefertigt. Das andere Linsenelement ist aus Barium-Kronglas mit einem Brechungsindex von etwa 1,61 und einer reziproken relativen Dispersion von etwa 50 gefertigt. Das zuerst genannte Linsenelement ist ein streuendes Linsenelement, und das zuletzt genannte Linsenelement ist ein sammelndes Linsenelement. Die beiden Linsenelemente sind an zueinander komplementären Flächen miteinander verbunden.

Das so hergestellte Brillenglas weist eine Rückfläche, d. h. dem Auge des Trägers zugewandte Fläche auf, die vollständig durch das zerstreuende Linsenelement gebildet ist, während die Vorderfläche des Brillenglases, d. h. die vom Auge des Trägers abgewandte Seite des Brillenglases teilweise durch die Oberfläche des sammelnden Linsenelements und in ihrem Randbereich durch die Oberfläche des streuenden Linsenelements gebildet wird. Das Brillenglas ist also nur im Zentralbereich achromatisch korrigiert. Dieses Brillenglas ist im Vergleich zu den vorstehend beschriebenen Achromaten mit vollflächiger achromatischer Korrektur immer noch relativ dick und von vergleichsweise hohem Gewicht.

Die Druckschrift DE 10 2010 047 846 A1 zeigt ein Brillenglas, mit einem ersten und einem zweiten Linsenelement, welche zumindest teilweise achromatisch miteinander zusammenwirken. Das zweite Linsenelement ist (zumindest im nicht gerandeten Zustand) ringförmig nur in einem Randbereich des ersten Linsenelements angeordnet. Das Brillenglas ist demnach in diesem Randbereich achromatisch korrigiert. Ferner ist dem Dokument ein Verfahren zum Herstellen des Brillenglases zu entnehmen.

Die DE 10 2012 102 743 A1 beschreibt, dass es für ein störungsfreies Sehen wichtig ist, dass die beiden das Brillenglas nach der Druckschrift DE 10 2010 047 846 A1 bildenden Linsensegmente eine glatte Oberfläche bildend zusammengesetzt sind. Das Dokument beschreibt auch ein Verfahren zum Auslegen eines derartigen Brillenglases.

Bei den in der DE 10 2010 047 846 A1 und der DE 10 2012 102 743 A1 beschriebenen Brillengläser sind aus Gewichtsersparnisgründen ausschließlich im Randbereich, in dem der Farbquerfehler höher ist als im Zentrum, achromatisch ausgebildet, nicht jedoch über die gesamte Brillenglasfläche. Darüber hinaus bedarf es des Zusammenfügens mindestens zweier unterschiedlicher Materialien im Halbfabrikat, was einen nicht unerheblichen Aufwand bei der optischen Berechnung und der Grundglasfertigung bedeutet.

Mit der Verminderung von Farbfehlern von Brillengläsern befasst sich auch der Fachartikel von W. N. Charman mit dem Titel "Hybrid diffractive-refractive achromatic spectacle lenses", welcher in Ophthal. Physiol. Opt. 1994, Band 14, Seiten 389 bis 392 veröffentlicht wurde. Dort wird betont, dass Achromaten, die eine Linse mit geringem Brechungsindex und hoher Abbe-Zahl und eine Linse mit einem hohen Brechungsindex und geringer Abbe-Zahl aufweisen, von denen die eine Linse zerstreuend und die andere sammelnd ist, als Brillengläser nicht praktikabel sind, da sie dem Wunsch nach geringer Dicke und geringem Gewicht von Brillengläsern zuwiderlaufen. Dort wird zur Behebung der Nachteile von Achromaten vorgeschlagen, eine refraktive Linse mit einem diffraktiven Element zu kombinieren, wobei die Kombination aus der refraktiven Linse und dem diffraktiven Element im Wesentlichen die gleiche Dicke und das gleiche Gewicht haben kann wie die refraktive achromatisch nicht korrigierte Linse allein.

Ein Brillenglas, das aus einer refraktiven Linse und einem diffraktiven Element zusammengesetzt ist, ist jedoch hinsichtlich seiner Herstellung sehr aufwändig, da das diffraktive Element mit einer hohen Präzision hergestellt werden muss, um zu vermeiden, dass durch das diffraktive Element andere Abbildungsfehler induziert werden.

Eine andere Möglichkeit die chromatische Aberration zu korrigieren besteht in der Verwendung einer GRIN-Optik. Die Abkürzung GRIN steht für den englischen Ausdruck "gradient refractive index". Die WO 2014/179780 A1 befasst sich mit solchen Gradientenindex-Linsen. Gradientenindex-Linsen sind nach diesem Dokument zylinderförmige, transparente optische Bauteile mit einem in radialer Richtung abnehmenden Brechungsindex. Meist nimmt der Brechungsindex quadratisch mit dem Abstand zur Mitte ab (Parabelfunktion). Ein kurzer Stab aus einem solchen Material wirkt wie eine gewöhnliche Sammellinse, besitzt aber an den Lichtein- und Lichtaustrittsseiten plane Oberflächen, worauf in dieser Druckschrift explizit auch im ersten Absatz des Abschnitts "Background of the invention" hingewiesen wird.

Dem Dokument WO 2014/179780 A1 entnimmt man das Ziel der Herstellung einer Gradientenindex-Linse mit einer Abbe-Zahl von über 100 durch Dotierung einer Polymermatrix mit Hilfe von anorganischen Nanokristallen. Als Beispiele für geeignete Materialien derartiger Nanokristalle werden ZnS, $ZrO_2$, ZnO, BeO, AIN, $TiO_2$ und $SiO_2$, angegeben. Als Materialien für die Polymermatrix gibt die Druckschrift Polyacrylat, Bisphenol A Novolak Epoxy Harz (Handelsname: SU-8) und Polymethylmethacrylat (PMMA) an. Die Mischung aus monomerem Polymer und Nanokristall wird mit Hilfe eines 3D-Druckverfahrens abgeschieden und nachfolgend zur Bildung der Gradientenindex-Linse mittels ultravioletter Strahlung oder thermisch ausgehärtet. Durch geeignete Materialwahl kann angeblich die chromatische Aberration einer derartigen Linse effizient eliminiert werden.

Die Patentanmeldung US 2015/0361286 A1 beruft sich auf einen ähnlichen Ansatz. Das darin beschriebene optische GRIN-Element wird in einem 3D-Druckverfahren aus zwei Nanokomposit-Tinten gebildet. Die beiden Nanokomposit-Tinten umfassen jeweils Nanofüllstoffe, die in einer jeweiligen gehärteten organischen Matrix verteilt sind. Die optischen Dispersionen der beiden Nanokomposit-Tinten unterscheiden sich. Die Verteilung der beiden Nanokomposit-Tinten führt zu optischen Dispersionsgradienten, welche angeblich chromatische Aberrationen korrigieren können, wenn sie in geeigneter Weise gewählt werden. Die Nanokomposit-Tinten können sich in der Art des Nanofüllstoffs, der Art der organischen Wirtsmatrix und der Konzentration des Nanofüllstoffs oder Kombinationen davon unterscheiden.

Fünf Beispiele für geeignete organische Matrixmaterialien sind angegeben, nämlich: Polyacrylat, Hexandioldiacrylat (HDODA), Polymethylmethacrylat (PMMA), Diethylenglycoldiacrylat (DEGDA) und Bisphenol A Novolak Epoxy Harz (SU-8). Die Nanofüllstoffe sind keramische Nanopartikel, die gegenüber den Lichtwellenlängen hinreichend klein sind, dass sie das Licht nicht streuen. Als Beispiele für Nanofüllstoffe gibt das Dokument Berylliumoxid (BeO), Aluminiumnitrid (AIN), Siliziumcarbid (SiC), Zinkoxid (ZnO), Zinksulfid (ZnS), Zirconiumoxid ($ZrO_2$), Yttrium Orthovanadat ($YVO_4$), Titandioxid ($TiO_2$), Kupfersulfid ($CuS_2$), Cadmiumselenid (CdSe), Bleisulfid (PbS), Molybdändisulfid ($MoS_2$) und Siliziumdioxid ($SiO_2$), einschließlich davon abgeleiteter Architekturen an.

Die WO 2015/102938 A1 beschreibt ebenfalls die Herstellung von Gradientenindex-Linsen mit Hilfe eines 3D-Druckverfahrens. Dem Dokument entnimmt man, dass das 3D-Druckverfahren die Möglichkeit bereitstellt, insbesondere auch den Brechungsindex lokal einzustellen. Die Einstellbarkeit des Brechungsindex in allen drei karthesischen Raumdimensionen ermöglicht es ferner, zahlreiche Aberrationen einschließlich sphärischer und chromatischer Aberrationen zu kontrollieren, und gleichzeitig die Linsenflächen frei geometrisch zu gestalten. Die Linse kann nach der Offenbarung der WO 2015/102938 A1 z.B. konvex und/oder konkav sein.

Die US 2013/0003186 A1 beschreibt die Ausbildung einer Linse aus einem kontinuierlichen GRIN-Material. Die durch eine ursprünglich vorhandene Dispersion von in eine einzelne Linse eintretendem Licht verursachte Trennung unterschiedlicher Wellenlängen wird teilweise durch die optische Dispersion eines kontinuierlichen GRIN Materials, das die Linse bildet, korrigiert. Die gezeigte Linse hat eine konvexe Fläche und eine plane Fläche.

Die DE 10 2009 004 377 A1 beschreibt die Herstellung eines Brillenglases mit Hilfe eines 3D-Druckverfahrens. Beim 3D-Drucken des Brillenglases können nach der Lehre dieses Dokuments ein oder mehrere Werkstoffe bzw. Materialien verwendet werden. Zumindest zwei Werkstoffe können eine verschiedene Farbe und/oder Transmissionsgrad und/oder Brechungsindex aufweisen. Es ist ein Brillenglas gezeigt, dessen Vorderfläche in an sich bekannter Art konvex und dessen Rückfläche konkav ausgebildet ist.

Die US 2016/0039208 A1 beschreibt die Herstellung von Brillengläsern mit Hilfe eines 3D-Druckverfahrens. Das 3D-Druckverfahren bedient sich eines Druckkopfes, der zwei Drucktinten in einem Verhältnis mischen kann, dass sich ein gewünschter spezifischer Brechungsindex einstellt. Die Mischung der Drucktinten kann in einer Mischkammer oder während dem Aufbringen im Flug erfolgen.

Die WO 2015/014381 A1 beschreibt die Herstellung afokaler, unifokaler, bifokaler, trifokaler oder progressiver Brillengläser mit Hilfe eines 3D-Druckverfahrens. Nach der Lehre des Dokuments soll das Brillenglas eine hohe Abbe-Zahl aufweisen, um chromatische Aberrationen zu verhindern.

Die US 2005/046957 A1, von der die Erfindung ausgeht, beschreibt die Herstellung eines optischen Elements, welches auch ein Brillenglas sein kann, mit Hilfe eines Mikro-Jet Druckverfahrens. Das Dokument offenbart das Aufbringen von Polymer-Tröpfchen unterschiedlicher Brechungsindices auf ein Substrat, wo sie Polymer-Pixel bilden. Die Pixel unterschiedlicher Brechungsindices können alternierend aufgebracht sein und sie können nach dem Aufbringen so groß sein, dass sie mit dem Auge oder einem Messinstrument erfasst werden können. Auf diese Weise kann ein optisches Element mit einem gewünschten Brechungsindexprofil erzeugt werden.

Der Erfindung liegt die Aufgabe zugrunde, ein Brillenglas bereitzustellen, bei dem Farbsäume bzw. Farbränder in der Bildebene, im Fall eines Brillenglases auf der Netzhaut des Auges, äußert, die der Brillenträger wahrnimmt und ab einer gewissen Stärke als störend empfindet, reduziert werden. Weiterhin besteht die Aufgabe der Erfindung darin, ein Verfahren zum Auslegen eines derartigen Brillenglases bereitzustellen.

Diese Aufgabe wird durch ein Brillenglas mit den Merkmalen des Patentanspruchs 1 sowie ein computerimplementiertes Verfahren zum Auslegen eines Brillenglases mit den Merkmalen des Patentanspruchs 13 gelöst. Vorteilhafte Ausführungen und Weiterbildungen der Erfindung sind Gegenstand der Unteransprüche.

Das erfindungsgemäße Brillenglas umfasst eine erste aus einer Mehrzahl (sich ggf. in der geometrischen Gestalt unterscheidender aber im Material identischer) erster Volumenelemente bestehende Volumenelementgruppe und eine zweite aus einer Mehrzahl (sich ggf. in der geometrischen Gestalt unterscheidender aber im Material identischer) zweiter Volumenelemente bestehende Volumenelementgruppe.

Die ersten Volumenelemente der ersten Volumenelementgruppe sind in der Art von Gitterpunkten eines geometrischen Gitters ein erstes Teilgitter bildend angeordnet. Die ersten Volumenelemente bestehen aus einem ersten Material mit einer ersten Abbe-Zahl $v_1$ entsprechend obiger Definition. In gleicher Weise sind die zweiten Volumenelemente in der Art von Gitterpunkten eines geometrischen Gitters ein zweites Teilgitter bildend angeordnet. Diese zweiten Volumenelemente bestehen aus einem zweiten Material mit einer zweiten Abbe-Zahl $v_2$. Die erste Abbe-Zahl $v_1$ und die zweite Abbe-Zahl $v_2$ unterscheiden sich. Das erste Material ist also nicht identisch mit dem zweiten Material.

Die ersten Volumenelemente und die zweiten Volumenelemente sind derart im Wechsel und benachbart zueinander angeordnet, dass die ersten und zweiten Teilgitter einander durchsetzen. Geht man z.B. von zwei Teilgittern identischer Art aus, so können diese beispielsweise zueinander verschoben oder versetzt angeordnet sein.

Ein Gitter in der Geometrie ist eine lückenlose und überlappungsfreie Partition eines Bereichs des Raumes durch eine Menge von Gitterzellen. Die Gitterzellen werden definiert durch eine Menge von (fiktiven oder imaginären) Gitterpunkten, die untereinander durch eine Menge von (fiktiven oder imaginären) Gitterlinien verbunden sind.

Dass sich das erste und das zweite Teilgitter durchsetzen bedeutet, dass das erste Teilgitter und das zweite Teilgitter einen Raum miteinander gemeinschaftlich haben, ohne ganz zusammenzufallen. Einander durchsetzen bedeutet im Rahmen der vorliegenden Erfindung eine Anordnung z.B. in der Art einer Zinkblendestruktur, die sich als Kombination zweier ineinander gestellter kubisch-flächenzentrierter Teilgitter beschreiben lässt, die um 1/4 der Raumdiagonale gegeneinander verschoben angeordnet sind. Umfasst sein sollen auch Schichtgitter, die um ein bestimmtes Maß eines in der Schichtfläche liegenden Vektors gegeneinander verschoben sind. Die beiden ersten und zweiten Teilgitter brauchen auch nicht zwangsläufig von identischer Gestalt zu sein. Es ist auch nicht zwingend, dass jeweils eines der ersten Volumenelemente unmittelbar benachbart zu einem der zweiten Volumenelemente angeordnet ist. Es kann z.B. auch eine Füll- und/oder Stützmatrix vorhanden sein, die die jeweiligen ersten und zweiten Volumenelemente umschließt.

Der Übergang zwischen einem ersten Volumenelement und einem zweiten Volumenelement kann auch sprunghaft durch sprunghafte Änderung des Materials der benachbarten ersten und zweiten Volumenelemente erfolgen.

Alternativ kann der Übergang zwischen einem ersten Volumenelement und einem zweiten Volumenelement auch graduell oder gleitend erfolgen. Dies kann entsprechend durch graduelle Änderung des Materials der benachbarten Volumenelemente erfolgen.

Die ersten und zweiten Volumenelemente mit ihren unterschiedlichen Abbe-Zahlen $v_1$ und $v_2$ wirken aufgrund deren Anordnung zueinander erfindungsgemäß wenigstens teilweise achromatisch zusammen. Der Farbquerfehler wird zumindest abgeschwächt. Die Form der einzelnen ersten und zweiten Volumenelemente und deren Anordnung zueinander sind so gewählt, dass der Quotient aus dem Farbquerfehler $\Delta\delta_{chrom}$ eines Brillenglases, welches ausschließlich aus dem ersten Material (also ohne achromatische Korrektur gefertigt ist) und dem Farbquerfehler $\Delta\delta_{chrom}$ des entsprechenden erfindungsgemäß ausgestalteten Brillenglases (also mit den einander durchsetzenden aus ersten und zweiten Volumenelementen gebildeten Teilgittern) gleicher dioptrischer Wirkungsverteilung am gleichen vorgegebenen Ort des Brillenglases größer als 1 ist. Vorzugsweise ist dieser Quotient größer als 2 und weiter vorzugsweise größer als 3.

Grundsätzlich wird nach der Erfindung das Prinzip des Achromaten (oder des Apochromaten), welches z.B. in Volker Witt, "Wie funktionieren Achromat und Apochromat? Teil 1: Von der Einzellinse zum Achromaten", Sterne und Weltraum, Oktober 2005, Seiten 72 bis 75 sowie Volker Witt, "Wie funktionieren Achromat und Apochromat? Teil 2: Vom Achromaten zum Apochromaten", Sterne und Weltraum, Dezember 2005, Seiten 76 bis 79 für den Fall von optischen Linsen (Anmerkung: dasselbe Prinzip gilt aber auch für optische Prismen) beschrieben ist, beibehalten. Die Vorderfläche des Brillenglases, also entsprechend der DIN EN ISO 13666:2013 Abschnitt 5.8 die Fläche eines Brillenglases, die bestimmungsgemäß in der Brille vom Auge abgewandt liegt, und die gegenüberliegende Rückfläche (DIN EN ISO 13666:2013 Abschnitt 5.9) sind weiterhin in an sich üblicher Weise ausgebildet. Die Vorderfläche ist demnach in der Regel (also abgesehen von lokal begrenzten Abweichungen) eine konvex gekrümmte Fläche und die Rückfläche ist (ebenfalls abgesehen von möglicherweise existierenden lokal begrenzten Abweichungen) konkav gekrümmt. Die längs des Lichtwegs vom von dem Brillenträger betrachteten Objekt durch das Brillenglas hindurch in das Auge des Brillenträgers hintereinander angeordneten ersten und zweiten Volumenelemente wirken erfindungsgemäß derart zusammen, dass die Achromasiebedingung, wonach sich die farbzerstreuenden Wirkungen der einzelnen im Lichtweg liegenden ersten und zweiten Volumenelemente aufheben ohne dass die Ablenkung selbst aufgehoben wird, näherungsweise erfüllt ist.

Diese Achromasiebedingung lässt sich z.B. durch Ausbildung der ersten und zweiten Volumenelemente in Form von (kleinen) Prismenelementen oder (kleinen) Linsenelementen erfüllen. Anders ausgedrückt: Durch geeignete Kombination mehrerer dispersiver optischer Volumenelemente (z. B. zwei oder mehr Prismen oder zwei oder mehr Linsen unterschiedlichen Materials) lässt sich die Farbzerstreuung des ersten Volumenelementes durch die des zweiten Volumenelements wieder aufheben, ohne dass die Ablenkung selbst aufgehoben wird.

Das Problem der Farbsäume wird durch die Konstruktion eines Achromaten gelöst. Diese Farbsäume hängen in ihrer Ausprägung von der Dispersion der einzelnen Materialien ab. Bei geeigneter Auswahl der Materialien kann die Gesamtsumme der chromatischen Aberrationen des Brillenglases minimiert, idealerweise eliminiert werden.

Es hat sich als günstig herausgestellt, wenn die erste Abbe-Zahl $v_1$ kleiner als 40 ist und die zweite Abbe-Zahl $v_2$ größer als 40 ist. Diese Bedingung lässt sich unter Verwendung handelsüblicher Kunststoffmaterialien realisieren, wie man der oben angegebenen Tabelle 1 entnehmen kann.

Das erste Material weist einen ersten Brechungsindex $n_1$ auf und das zweite Material weist einen zweiten Brechungsindex $n_2$ auf. Die Erfinder haben weiter festgestellt, dass sich die Achromasiebedingung, wonach sich die farbzerstreuenden Wirkungen der einzelnen im Lichtweg liegenden ersten und zweiten Volumenelemente aufheben, ohne dass die Ablenkung selbst aufgehoben wird, realisieren lässt, wenn der erste Brechungsindex $n_1$ größer als der zweite Brechungsindex $n_2$ ist. Es findet erfindungsgemäß folglich eine Miniaturisierung und Multiplikation des oben für den Fall von achromatisch zusammenwirkenden Linsen beschriebenen makroskopischen Prinzips (siehe Volker Witt, a.a.O.) statt.

Nach derzeitigem Kenntnisstand ist die Spanne unterschiedlicher zur Verfügung stehender Brechungsindices bei Verwendung von Kunststoffmaterialien ($1,48 < n_e < 1,76$) deutlich kleiner als bei Verwendung mineralischer Gläser ($1,5 < n_e < 1,9$). Dies liegt daran, dass sehr hohe Anforderungen an die optische Qualität der Kunststoffe bei gleichzeitig geringem Preis für die Verwendung zur Herstellung refraktiver, d.h. auf der Lichtbrechung beruhender Brillengläsern, auf die im Rahmen der vorliegenden Erfindung insbesondere abgestellt wird, bestehen. Die Erfinder schlagen daher in einer vorteilhaften Ausführungsvariante vor, als zweites Material, aus dem die zweiten Volumenelemente der zweiten Volumenelementgruppe bestehen, ein Material aus der Gruppe Poly(methylmethacrylat) (PMMA), Polyallyldiglycolcarbonat (PADC), Polyurethan (PU) und Polyacrylat ist. Alternativ oder zusätzlich schlagen die Erfinder vor, dass das erste Material, aus dem die ersten Volumenelemente der ersten Volumenelementgruppe bestehen, ein Material aus der Gruppe Polyethylenterephthalat (PET), Polycarbonat (PC), Polythiourethan (PTU) und Polyepisulfid ist.

Wie in der Beschreibungseinleitung ausgeführt wurde, ist es bekannt, den Brechungsindex transparenter Materialein durch Zugabe von Nanopartikeln zu einer Polymermatrix zu verändern, soweit diese hinreichend klein sind und somit keine störende lichtstreuende Wirkung aufweisen. Hierzu wird insbesondere auf die oben genannten Dokumente WO 2014/179780 A1 und US 2015/0361286 A1 verwiesen.

Die Lehre dieser Dokumente auf die vorliegende Erfindung übertragend schlagen die Erfinder vor, das erste Material aus der Gruppe folgender Materialien zu wählen:

Poly(methylmethacrylat) (PMMA), Polyallyldiglycolcarbonat (PADC), Polyurethan (PU), Polyacrylat, Polyethylenterephthalat (PET), Polycarbonat (PC), Polythiourethan (PTU), Polyepisulfid, Hexandioldiacrylat (HDODA), Diethylenglycoldiacrylat (DEGDA) und Bisphenol A Novolak Epoxy Harz (SU-8). Das erste Material kann in Reinform vorliegen oder es kann einen ersten Zusatz einer von Null verschiedenen ersten Konzentration von Nanopartikeln aus der Gruppe Berylliumoxid (BeO), Aluminiumnitrid (AlN), Siliziumcarbid (SiC), Zinkoxid (ZnO), Zinksulfid (ZnS), Zirconiumoxid ($ZrO_2$), Yttrium Orthovanadat ($YVO_4$), Titandioxid ($TiO_2$), Kupfersulfid ($CuS_2$), Cadmiumselenid (CdSe), Bleisulfid (PbS), Molybdändisulfid ($MoS_2$) und Siliziumdioxid ($SiO_2$) enthalten. Wenn das erste Material in Reinform vorliegt, ist die Konzentration des Zusatzes Null. Die Formulierung erster Zusatz einer ersten Konzentration von Nanopartikeln soll beide Fälle, also Konzentration Null und von Null verschiedene Konzentration umfassen.

In entsprechender Weise kann das zweite Material ein Material aus der Gruppe Poly(methylmethacrylat) (PMMA), Polyallyldiglycolcarbonat (PADC), Polyurethan (PU), Polyacrylat, Polyethylenterephthalat (PET), Polycarbonat (PC), Polythiourethan (PTU), Polyepisulfid, Hexandioldiacrylat (HDODA), Diethylenglycoldiacrylat (DEGDA) und Bisphenol A Novolak Epoxy Harz (SU-8) sein und einen zweiten Zusatz einer zweiten Konzentration von Nanopartikeln aus der Gruppe Berylliumoxid (BeO), Aluminiumnitrid (AlN), Siliziumcarbid (SiC), Zinkoxid (ZnO), Zinksulfid (ZnS), Zirconiumoxid ($ZrO_2$), Yttrium Orthovanadat ($YVO_4$), Titandioxid ($TiO_2$), Kupfersulfid ($CuS_2$), Cadmiumselenid (CdSe), Bleisulfid (PbS), Molybdändisulfid ($MoS_2$) und Siliziumdioxid ($SiO_2$) aufweisen. Die Formulierung zweiter Zusatz einer zweiten Konzentration von Nanopartikeln soll wiederum beide Fälle, also eine Konzentration Null und eine von Null verschiedene Konzentration umfassen.

Die oben beschriebene Wirkung des erfindungsgemäßen Brillenglases lässt sich mit ersten Volumenelementen erzielen, die jeweils ein Volumen zwischen 1000 $\mu m^3$ und 1 mm$^3$ aufweisen und/oder mit zweiten Volumenelementen, die jeweils ein Volumen zwischen 1000 $\mu m^3$ und 1 mm$^3$ aufweisen. Das kleinste mögliche Volumen eines Volumenelements ist durch das Herstellverfahren, z.B. beim sogenannten MultiJet bzw. PolyJet-Modeling durch die Tropfengröße und z.B. bei einem Stereolithographie-Verfahren durch die Fokusgröße des Lasers, vorgegeben. Details zu den Fertigungsverfahren werden in nachfolgenden Abschnitten beschrieben.

Die Zahl der ersten Volumenelemente, die den ersten Teil bilden, liegt vorzugsweise zwischen 50 und $10^9$, weiter vorzugsweise zwischen 100 und $10^8$, schließlich weiter vorzugsweise zwischen 200 und $10^7$ und schließlich noch weiter vorzugsweise zwischen 500 und $10^6$.

Die Zahl der zweiten Volumenelemente, die den zweiten Teil bilden, liegt vorzugsweise zwischen 50 und $10^9$, weiter vorzugsweise zwischen 100 und $10^8$, schließlich weiter vorzugsweise zwischen 200 und $10^7$ und schließlich noch weiter vorzugsweise zwischen 500 und $10^6$.

Die Zahl der ersten und zweiten Volumenelemente liegt vorzugsweise in der gleichen Größenordnung. Das bedeutet, dass die Zahl der ersten Volumenelemente und die Zahl der zweiten Volumenelemente um nicht mehr als den Faktor 10, vorzugsweise nicht mehr als den Faktor 8, weiter vorzugsweise nicht mehr als den Faktor 5 und schließlich weiter vorzugsweise nicht mehr als den Faktor 2 voneinander abweichen.

Wie oben bereits ausgeführt wurde, lässt sich die Achromasiebedingung, die längs des Lichtwegs vom von dem Brillenträger betrachteten Objekt durch das Brillenglas hindurch in das Auge des Brillenträgers nach einer vorteilhaften Ausgestaltung der Erfindung wenigstens näherungsweise erfüllt sein soll, wenn die längs dieses Lichtwegs hintereinander angeordneten ersten und zweiten Volumenelemente derart zusammen wirken, dass sich die farbzerstreuenden Wirkungen der einzelnen im Lichtweg liegenden ersten und zweiten Volumenelemente im Wesentlichen aufheben ohne dass die Ablenkung selbst aufgehoben wird. Diese Achromasiebedingung lässt sich z.B. durch Ausbildung der ersten und zweiten Volumenelemente in Form von (Mikro-) Prismenelementen oder (Mikro-) Linsenelementen erfüllen. Anders ausgedrückt: Durch geeignete Kombination mehrerer dispersiver optischer Volumenelemente (z. B. zwei oder mehr Prismen oder zwei oder mehr Linsen unterschiedlichen Materials) lässt sich die Farbzerstreuung des ersten Volumenelementes (oder der mehreren ersten Volumenelemente) durch die des zweiten Volumenelements (oder der mehreren zweiten Volumenelemente) wieder aufheben, ohne dass die Ablenkung selbst aufgehoben wird.

Konkret kann dies z.B. erreicht werden, wenn das erste Teilgitter des eine Vorderfläche und eine Rückfläche aufweisenden erfindungsgemäßen Brillenglases ein dreidimensionales Gitter ist und die ersten Volumenelemente jeweils eine zumindest näherungsweise prismatische Gestalt mit einer jeweils zugeordneten Prismenbasis aufweisen. Das zweite Teilgitter ist ebenfalls ein dreidimensionales Gitter und die zweiten Volumenelemente weisen in ähnlicher Weise jeweils eine zumindest näherungsweise prismatische Gestalt mit einer jeweils zugeordneten Prismenbasis auf. Geht man davon aus, dass jeweils entlang einer kürzesten von der Rückfläche zur Vorderfläche verlaufenden gedachten linearen Linie mehrere der ersten und zweiten Volumenelemente hintereinander angeordnet sind und die mehreren hintereinander angeordneten der ersten und zweiten Volumenelemente jeweils im Wechsel, nämlich jeweils eines der ersten Volumenelemente benachbart zu einem der zweiten Volumenelemente, welches wiederum benachbart zu einem der ersten Volumenelemente usw., angeordnet sind, so ist bei dieser Variante erfindungsgemäß vorgesehen, dass in dieser Hintereinanderanordnung die jeweilige Prismenbasis von einem der ersten Volumenelemente entgegengesetzt zu der jeweiligen Prismenbasis zu einem jeweils benachbarten der zweiten Volumenelemente angeordnet ist.

Eine besonders vorteilhafte Ausgestaltung der Erfindung besteht darin, dass das Brillenglas einen Träger mit einer Fläche umfasst und dass die erste Volumenelementgruppe und die zweite Volumenelementgruppe auf der Fläche des Trägers angeordnet sind. Dies ist besonders dann günstig, wenn die ersten und zweiten Volumenelemente mit Hilfe eines 3D-Druckverfahrens hergestellt werden.

Der Träger kann eine objektseitige sphärische oder torische oder freigeformte Oberfläche aufweisen und die Fläche, auf der die erste Volumenelementgruppe und die zweite Volumenelementgruppe angeordnet sind, kann die augenseitige Fläche des Trägers sein. Der Träger kann alternativ auch eine augenseitige sphärische oder torische oder freigeformte Oberfläche aufweisen und die Fläche, auf der die erste Volumenelementgruppe und die zweite Volumenelementgruppe angeordnet sind, kann die objektseitige Fläche des Trägers sein. Bei beiden vorstehend beschriebenen Varianten setzt sich die Gesamtwirkung des Brillenglases aus der Brechkraft der sphärischen oder torischen oder rotationssymmetrisch asphärischen oder freigeformten Fläche und den lichtbrechenden Eigenschaften der Volumenelemente der ersten und der zweiten Volumenelementgruppen zusammen.

Schließlich ist es auch möglich, dass die Fläche, auf der die erste Volumenelementgruppe und die zweite Volumenelementgruppe angeordnet sind, die augenseitige und/oder die objektseitige Fläche des Trägers ist bzw. sind. Die Gesamtwirkung des Brillenglases setzt sich dann im Wesentlichen aus den lichtbrechenden Eigenschaften der Volumenelemente der ersten und der zweiten Volumenelementgruppen zusammen.

Auf der ersten Volumenelementgruppe und der zweiten Volumenelementgruppe kann auch eine Beschichtung angeordnet sein. Als Beschichtungen kommen insbesondere sämtliche in der Beschreibungseinleitung genannten Funktionsschichtstrukturen in Betracht. Genannt seien insbesondere solche, die optische Eigenschaften wie Entspiegelung, Verspiegelung, Lichtpolarisierung, Färbung, Selbsttönung usw. sowie mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften des Brillenglases beeinflussen bzw. ändern.

Schließlich ist es möglich, dass die erste Volumenelementgruppe und die zweite Volumenelementgruppe als vergrabene Strukturen ausgeführt sind. Dadurch wird einerseits z.B. eine spätere Hart- oder Antireflexbeschichtung wesentlich erleichtert (es können z.B. herkömmliche glättende Hartbeschichtungssysteme eingesetzt werden), andererseits bilden Unstetigkeiten bzw. Knicke oder Sprünge der Oberflächen der aneinander grenzenden Volumenelemente keine Kavitäten zur späteren Ansammlung von Verschmutzungen auf der Oberfläche des fertigen Brillenglases. Unter vergrabenen Strukturen versteht man die Einbettung in ein Substratmaterial.

Grundsätzlich ist jedes Fertigungsverfahren zur Herstellung der vorstehend beschriebenen Brillengläser geeignet, das die Kontrolle der Brechungsindices für jedes einzelne Volumenelement bzw. Voxel erlaubt. Mit diesem Fertigungsverfahren wird eine dreidimensionale Struktur aufgebaut, bei der das Material in räumlicher Verteilung variiert wird. In Blickrichtung können die der Objektseite oder der Augenseite zugewandten Flächen der Volumenelemente in beliebiger Weise ausgeformt sein, beispielsweise aber nicht abschließend als Quadrat, Rechteck, Raute, Sechseck oder Kreis.

Ein erfindungsgemäßes Verfahren zum Herstellen eines Brillenglases, insbesondere der vorstehend beschriebenen unterschiedlichen Ausführungsformen, umfasst die Schritte:

- additives Fertigen einer ersten Volumenelementgruppe, wobei die erste Volumenelementgruppe eine Mehrzahl an ersten Volumenelementen umfasst, wobei die Mehrzahl an ersten Volumenelementen in der Art von Gitterpunkten eines geometrischen Gitters ein erstes Teilgitter bildend angeordnet sind, wobei die ersten Volumenelemente aus einem ersten Material mit einer ersten Abbe-Zahl $v_1$ bestehen,
- additives Fertigen einer zweiten Volumenelementgruppe, wobei die zweite Volumenelementgruppe eine Mehrzahl an zweiten Volumenelementen umfasst, wobei die Mehrzahl an zweiten Volumenelementen in der Art von Gitterpunkten eines geometrischen Gitters ein zweites Teilgitter bildend angeordnet sind, wobei die zweiten Volumenelemente aus einem zweiten Material mit einer zweiten Abbe-Zahl $v_2$ bestehen, wobei sich die erste Abbe-Zahl $v_1$ und die zweite Abbe-Zahl $v_2$ unterscheiden, und wobei das erste Teilgitter und das zweite Teilgitter beim additiven Fertigen einander durchsetzend angeordnet werden.

Die Form der einzelnen ersten und zweiten Volumenelemente und deren Anordnung zueinander sind so gewählt, dass der Quotient aus dem Farbquerfehler $\Delta\delta_{chrom}$ eines Brillenglases, welches ausschließlich aus dem ersten Material (also ohne achromatische Korrektur gefertigt ist) und dem Farbquerfehler $\Delta\delta_{chrom}$ des entsprechenden erfindungsgemäß ausgestalteten Brillenglases (also mit den einander durchsetzenden aus ersten und zweiten Volumenelementen gebildeten Teilgittern) gleicher dioptrischer Wirkungsverteilung am gleichen vorgegebenen Ort des Brillenglases größer als 1 ist. Vorzugsweise ist dieser Quotient größer als 2 und weiter vorzugsweise größer als 3.

Additives Fertigen (gleichbedeutend mit additive Fertigung und generativem Fertigungsverfahren) - englisch: Additive Manufacturing (AM) - ist eine umfassende Bezeichnung für die bisher häufig als Rapid Prototyping bezeichneten Verfahren zur schnellen und kostengünstigen Fertigung von Modellen, Mustern, Prototypen, Werkzeugen und Endprodukten. Diese Fertigung erfolgt direkt auf der Basis von rechnerinternen Datenmodellen aus formlosem (Flüssigkeiten, Pulver u. ä.) oder formneutralem (band-, drahtförmig) Material mittels chemischer und/oder physikalischer Prozesse. Obwohl es sich um urformende Verfahren handelt, sind für ein konkretes Erzeugnis keine speziellen Werkzeuge erforderlich, die die jeweilige Geometrie des Werkstückes gespeichert haben (zum Beispiel Gussformen). Den aktuellen Stand der Technik vermittelt der VDI Statusreport AM 2014. Eine Übersicht über aktuelle 3D-Druckverfahren gibt https://3druck.com/grundkurs-3d-drucker/teil-2-uebersicht-der-aktuellen-3d-druckverfahren-462146/, heruntergeladen am 13.7.2016.

Als besonders geeignet hat sich die Methode des Multi Jet Modelling bzw. PolyJet-Printing herausgestellt. Dieses Verfahren ist z.B. unter der URL https://de.wikipedia.org/wiki/ Multi_Jet_Modeling, der URL http://www.materialise.de/3d-druck/polyjet oder der URL http://www.stratasys.com/de/3d-drucker/technologies/polyjet-technology, jeweils heruntergeladen am 13.7.2016 beschrieben. PolyJet ist eine leistungsstarke 3D-Drucktechnologie, mit der glatte, präzise Bauteile, Prototypen und Produktionshilfsmittel hergestellt werden können. Dank einer mikroskopischen Schichtauflösung und einer Genauigkeit von bis zu 0,1 mm können damit aus dem für jede Technologie umfangreichsten Spektrum von Materialien dünne Wände und komplexe Geometrien hergestellt werden. Der PolyJet-3D-Druck funktioniert ähnlich wie der Tintenstrahldruck. Statt jedoch Tintentropfen auf Papier zu sprühen, sprühen PolyJet-3D-Drucker Schichten aus vernetzbarem, flüssigem Fotopolymer auf eine Bauplattform. Das Verfahren ist vergleichsweise einfach: In einem ersten Vorbereitungsschritt berechnet die Vorbereitungssoftware automatisch die Platzierung des Fotopolymers und des Stützmaterials (d.h. eines Materials, welches lediglich während des 3D-Drucks zur Positionierung und Stützung des Fotopolymers dient, bis dieses ausgehärtet ist) anhand einer 3D-CAD-Datei. Bei der eigentlichen Produktion sprüht der 3D-Drucker winzige Tröpfchen flüssigen Fotopolymers und vernetzt diese sofort mittels UV-Licht. Auf der Bauplattform sammeln sich so feine Schichten an, aus denen ein oder mehrere präzise 3D-Modelle oder -Teile entstehen. Wenn

Überhänge oder komplexe Formen unterstützt werden müssen, sprüht der 3D-Drucker ein entfernbares Stützmaterial. Der Benutzer kann das Stützmaterial leicht von Hand, mit Wasser oder in einem Lösungsmittelbad entfernen. Die Modelle und Bauteile können bevorzugt direkt aus dem 3D-Drucker bearbeitet und verwendet werden, ohne nachhärten zu müssen.

Der 3D-Drucker der Bezeichnung Stratasys (Objet) Eden 260 V ist insbesondere für den erfindungsgemäßen Anwendungsfall geeignet. Die oben in der Beschreibungseinleitung angegebenen und insbesondere in den Dokumenten WO 2014/179780 A1 und WO 2015/014381 A1 genannten Materialien sind für die Verwendung beim erfindungsgemäßen Verfahren geeignet. So sind beispielsweise geeignete Polymere für die ersten und zweiten Volumenelemente Polyolefine wie z.B. Cycloolefinpolymere, Polyacrylate wie z.B. Polymethyl(meth)acrylate, Poly(meth)acrylate, Polyethyl(meth)acrylate, Polybutyl(meth)acrylate, Polyisobutyl(meth)acrylate, Polyester, Polyamide, Polysiloxane, Polyimide, Polyurethane, Polythiourethane, Polycarbonate, Polyallyle, Polysulfide, Polyvinyle, Polyarylene, Polyoxide und Polysulfone, und Mischungen davon an. Als Druckmaterial geeignete Monomere oder Vorpolymere zur Erzeugung der ersten und zweiten Volumenelemente kommen Olefine, Acryle, Epoxide, organische Säuren, Carboxylsäuren, Styrene, Isocyanate, Alkohole, Norbornene, Thiole, Amine, Amide, Anhydride, Allyle, Silikone, Vinylester, Vinylether, Vinylhalide und Episulfide in Betracht. Die Monomere oder Vorpolymere können thermisch oder strahlungsinduziert (insbesondere mittels UV-Strahlung) aushärtbar sein. Zur strahlungsindizierten Aushärtung können Photoinitiatoren und ggf. Co-Photoinitiatoren eingesetzt werden.

Beim Einsatz eines 3D-Druckers, der thermoplastische Kunststoffe tröpfchenweise oder allgemeiner mit Kontrolle einzelner Volumenelemente bzw. Voxel verarbeiten kann, bieten sich die beiden folgenden Kombinationen an:

- PMMA (niederbrechendes Material für zweite Volumenelemente) und PC (hochbrechendes Material für erste Volumenelemente)
- PMMA (niederbrechendes Material für zweite Volumenelemente) und PET (hochbrechendes Material für erste Volumenelemente)

Beim Einsatz eines 3D-Druckers, der Monomere duroplastischer Kunststoffe tröpfchenweise oder allgemeiner mit Kontrolle einzelner Voxel mit (vorzugsweise direkt) nachfolgender Härtung verarbeiten kann, bieten sich unter anderem die folgenden Kombinationen an:

- ADC (niederbrechendes Material für zweite Volumenelemente) und Episulfid (MR-174) (hochbrechendes Material für erste Volumenelemente)
- PU (niederbrechendes Material für zweite Volumenelemente) und PTU (MR-7) (hochbrechendes Material für erste Volumenelemente)

Die ersten und zweiten Volumenelemente können auch wie oben beschrieben aus einer mit Nanopartikeln versetzten organischen Matrix bestehen. Die organische Matrix kann z.B. aus Di(ethylenglykol)diacrylat, Neopentylglykoldiacrylat, Hexandioldiacrylat, Bisphenol-A-Novolak Epoxy Harz (SU8), 2-Hydroxyethylmethacrylat (HEMA), Polyacrylat, Poly(meth)acrylat, Polymethyl(meth)acrylat (PMMA), Styren und Poly[(2,3,4,4,5,5-Hexafluorotetrahydrofuran-2,3-diyl)(1,1,2,2-tetrafluoroethylen)] (CYTOP) bestehen. Mögliche Materialien für die Nanopartikel sind z.B. ZnS, $ZrO_2$, ZnO, BeO, AlN, $TiO_2$ und $SiO_2$.

Das Brillenglas nach der Erfindung muss nicht zwangsläufig in gegenständlicher Form vorliegen. Vielmehr genügt ein virtuelles Modell des Brillenglases, welches auf einem (insbesondere nichtflüchtigen) Datenträger (gemeint ist jedes geeignete Speichermedium) in Form einer Repräsentanz (z.B. als Datenstruktur; für den Fall des oben beschriebenen additiven Verfahrens z.B. als 3D-CAD-Datei) abgespeichert ist.

Um ein derartiges virtuelles Modell zu generieren, welches dann die Grundlage für Fertigungsdaten zur Herstellung eines gegenständlichen Brillenglases bildet, bedarf es eines computerimplementierten Verfahrens zum Auslegen eines Brillenglases. Das erfindungsgemäße computerimplementierte Verfahren zum Auslegen eines Brillenglases umfasst die Schritte:

- Bereitstellen einer virtuellen Repräsentanz einer ersten Volumenelementgruppe, wobei die erste Volumenelementgruppe eine Mehrzahl an ersten Volumenelementen umfasst, wobei die Mehrzahl an ersten Volumenelementen in der Art von Gitterpunkten eines geometrischen Gitters ein erstes Teilgitter bildend angeordnet sind, wobei die ersten Volumenelemente aus einem ersten Material mit einer ersten Abbe-Zahl ($v_1$) bestehen,
- Bereitstellen einer virtuellen Repräsentanz einer zweiten Volumenelementgruppe, wobei die zweite Volumenelementgruppe eine Mehrzahl an zweiten Volumenelementen umfasst, wobei die Mehrzahl an zweiten Volumenelementen in der Art von Gitterpunkten eines geometrischen Gitters ein zweites Teilgitter bildend angeordnet sind, wobei die zweiten Volumenelemente aus einem zweiten Material mit einer zweiten Abbe-Zahl ($v_2$) bestehen, wobei sich die erste Abbe-Zahl ($v_1$) und die zweite Abbe-Zahl ($v_2$) unterscheiden, und das erste Teilgitter und das zweite Teilgitter einander durchsetzend angeordnet sind

- Vorgeben eines Lichtwegs durch das Brillenglas hindurch und
- Anordnen der ersten und zweiten Volumenelemente derart, dass sie in dem vorgegebenen Lichtweg durch das Brillenglas hindurch wenigstens teilweise achromatisch zusammenwirken.

Die eingangs gestellte Aufgabe wird durch ein derartiges erfindungsgemäßes computerimplementiertes Verfahren zum Auslegen eines Brillenglases vollumfänglich gelöst.

Beispielsweise können diejenigen der ersten und zweiten Volumenelemente, die vorgesehen sind, auf einem vorgegebenen Lichtweg durch das Brillenglas hindurch hintereinander angeordnet zu werden, als Prismenelemente oder als Linsenelemente ausgebildet werden. Anders ausgedrückt werden mehrere dispersive optische erste und zweite Volumenelemente, die als Prismenelemente oder als Linsenelemente ausgebildet sind, so im Lichtweg zueinander ausgebildet und angeordnet, dass sich die Farbzerstreuung des ersten Volumenelementes (oder der mehreren ersten Volumenelemente) durch die des zweiten Volumenelements (oder der mehreren zweiten Volumenelemente) wieder aufheben, ohne dass die Ablenkung selbst aufgehoben wird.

Bestandteil der Erfindung ist auch ein Computerprogramm mit Programmcode zur Durchführung aller Verfahrensschritte des o.a. Verfahrens zum Auslegen eines Brillenglases, wenn das Computerprogramm in einem Computer insbesondere in Form eines compilierten Codes geladen und/oder in einem Computer insbesondere in Form eines interpretierten Codes ausgeführt wird.

Oben wurde bereits erläutert, dass das Brillenglas einen Träger aufweisen kann, auf dem die erste und die zweite Volumenelementgruppe angeordnet sind. Eine besonders vorteilhafte Ausgestaltung des erfindungsgemäßen Herstellverfahrens besteht darin, einen Träger mit einer Fläche bereitzustellen und die erste Volumenelementgruppe und die zweite Volumenelementgruppe auf die Fläche des Trägers zu applizieren. Dies ist besonders dann günstig, wenn die ersten und zweiten Volumenelemente mit Hilfe eines 3D-Druckverfahrens hergestellt werden.

Der Träger kann eine objektseitige sphärische oder torische oder freigeformte Oberfläche aufweisen und die Fläche, auf der die erste Volumenelementgruppe und die zweite Volumenelementgruppe appliziert werden, kann die augenseitige Fläche des Trägers sein. Der Träger kann alternativ auch eine augenseitige sphärische oder torische oder freigeformte Oberfläche aufweisen und die Fläche, auf der die erste Volumenelementgruppe und die zweite Volumenelementgruppe aufgebracht werden, kann die objektseitige Fläche des Trägers sein. Bei beiden vorstehend beschriebenen Varianten setzt sich die Gesamtwirkung des Brillenglases aus der Brechkraft der sphärischen oder torischen oder rotationssymmetrisch asphärischen oder freigeformten Fläche und den lichtbrechenden Eigenschaften der Volumenelemente der ersten und der zweiten Volumenelementgruppen zusammen.

Schließlich ist es auch möglich, dass die Fläche, auf die die erste Volumenelementgruppe und die zweite Volumenelementgruppe appliziert werden, die augenseitige und/oder die objektseitige Fläche des Trägers ist bzw. sind. Die Gesamtwirkung des Brillenglases setzt sich dann im Wesentlichen aus den lichtbrechenden Eigenschaften der Volumenelemente der ersten und der zweiten Volumenelementgruppen zusammen.

Eine Ausführungsvariante der Erfindung besteht darin, den Träger mit der Fläche additiv zu fertigen und nachfolgend die erste Volumenelementgruppe und die zweite Volumenelementgruppe darauf additiv aufzubringen.

Die Erfindung wird nachfolgend anhand der Zeichnung näher beschrieben. Es zeigen:

Figur 1    ein erstes Ausführungsbeispiel für die durchsetzend ineinander verschobene Anordnung zweier aus Volumenelementen erster und zweiter Volumenelementgruppen gebildeter Teilgitter

Figur 2    ein Ausführungsbeispiel für die durchsetzend ineinander verschobene Anordnung von vier aus Volumenelementen erster, zweiter, dritter und vierter Volumenelementgruppen gebildeter Teilgitter

Figur 3    ein zweites Ausführungsbeispiel für die durchsetzend ineinander verschobene Anordnung zweier aus Volumenelementen erster und zweiter Volumenelementgruppe gebildeter Teilgitter

Figur 4    ein drittes Ausführungsbeispiel für die durchsetzend ineinander verschobene Anordnung zweier aus Volumenelementen erster und zweiter Volumenelementgruppe gebildeter Teilgitter

Figur 5    ein viertes Ausführungsbeispiel für die durchsetzend ineinander verschobene Anordnung zweier aus Volumenelementen erster und zweiter Volumenelementgruppe gebildeter Teilgitter

a) Anordnung der Volumenelemente
b) vergrößerte Darstellung jeweils eines der ersten und zweiten Volumenelemente (erste Alternative)
c) vergrößerte Darstellung jeweils eines der ersten und zweiten Volumenelemente (zweite Alternative)

Figur 6  ein erstes Ausführungsbeispiel eines erfindungsgemäßen Brillenglases in Draufsicht von der Objektseite (Prinzipskizze)

Figur 7  ein zweites Ausführungsbeispiel eines erfindungsgemäßen Brillenglases im Querschnitt (Prinzip skizze)

Figur 8  ein drittes Ausführungsbeispiel eines erfindungsgemäßen Brillenglases im Querschnitt (Prinzip skizze)

Figur 9  ein viertes Ausführungsbeispiel eines erfindungsgemäßen Brillenglases im Querschnitt (Prinzip skizze)

Figur 10  ein fünftes Ausführungsbeispiel eines erfindungsgemäßen Brillenglases im Querschnitt (Prinzip skizze)

Figur 11  ein Ausführungsbeispiel einer Brille mit einem erfindungsgemäßen Brillenglas

Oben wurde ausgeführt, dass das Brillenglas nach der Erfindung wenigstens zwei Volumenelementgruppen umfasst. Die beiden Volumenelementgruppen, nachfolgend als erste und zweite Volumenelementgruppen bezeichnet, umfassen jeweils eine Mehrzahl an entsprechenden Volumenelementen. Die Volumenelemente der ersten Volumenelementgruppe sind nachfolgend als erste Volumenelemente bezeichnet, die Volumenelemente der zweiten Volumenelementgruppe sind nachfolgend als zweite Volumenelemente bezeichnet.

Die ersten Volumenelemente sind in der Art von Gitterpunkten eines geometrischen Gitters angeordnet und bilden ein erstes Teilgitter. Die ersten Volumenelemente bestehen aus einem ersten Material mit einer ersten Abbe-Zahl $v_1$. Die zweiten Volumenelemente sind ebenfalls in der Art von Gitterpunkten eines geometrischen Gitters angeordnet und bilden für sich genommen zusammen ein zweites Teilgitter. Die ersten Volumenelemente bestehen aus einem zweiten Material mit einer zweiten Abbe-Zahl $v_2$, welche sich von der ersten Abbe-Zahl $v_1$ unterscheidet.

Das erste Teilgitter und das zweite Teilgitter sind sich jeweils durchsetzend ineinander verschoben angeordnet. Dadurch fallen die Bereiche des Brillenglases, welche durch die beiden jeweils aus unterschiedlichen Volumenelementen gebildeten Teilgitter definiert sind makroskopisch geometrisch zusammen. Dies soll nachfolgend noch einmal anhand der Figuren verdeutlicht werden.

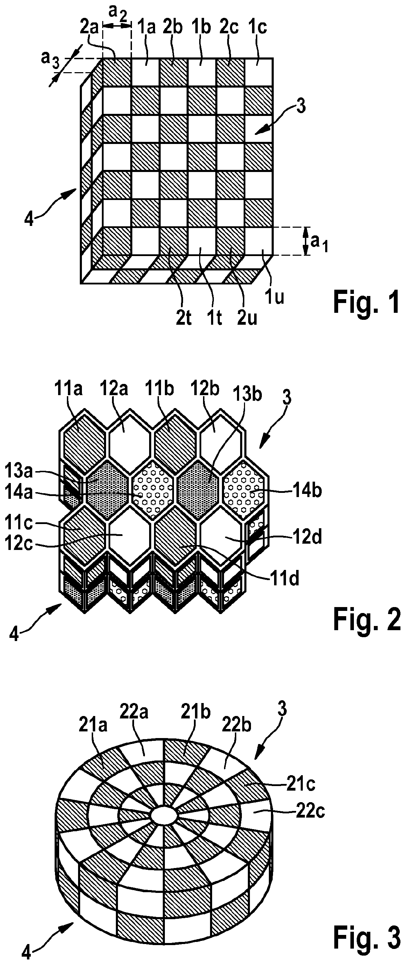

Die Figur 1 zeigt ein erstes Ausführungsbeispiel für die durchsetzend ineinander verschobene Anordnung zweier aus Volumenelementen erster und zweiter Volumenelementgruppen gebildeter Teilgitter. Das erste Teilgitter besteht aus den im vorliegenden Ausführungsbeispiel quaderförmig gezeichneten Volumenelementen 1a, 1b, 1c ... 1t, 1u, die wie die weißen Felder zweier übereinander angeordneter Schachbretter angeordnet sind. Das zweite Teilgitter besteht aus den im vorliegenden Ausführungsbeispiel quaderförmig gezeichneten Volumenelementen 2a, 2b, 2c ... 2t, 2u, die wie die schwarzen Felder zweier übereinander angeordneter Schachbretter angeordnet sind. Die Farben der Felder des unteren Schachbretts sind gegenüber den Farben des oberen Schachbretts vertauscht.

Jedes Volumenelement 1a, 1b, 1c ... 1t, 1u, 2a, 2b, 2c ... 2t, 2u nimmt in diesem anschaulichen Ausführungsbeispiel denselben Raum mit den Kantenlängen $a_1$, $a_2$, $a_3$ ein. Die Kantenlängen ai, $a_2$, $a_3$ liegen regelmäßig im Bereich zwischen 10 $\mu$m und 1 mm. Die Volumina der quaderförmigen Volumenelemente 1a, 1b, 1c ... 1t, 1u, 2a, 2b, 2c ... 2t, 2u sind dann im Bereich zwischen 1000 $\mu$m$^3$ und 1 mm$^3$.

Das erste Teilgitter basierend auf den Volumenelementen 1a, 1b, 1c ... 1t, 1u und das zweite Teilgitter basierend auf den Volumenelementen 2a, 2b, 2c ... 2t, 2u sind im vorliegenden Ausführungsbeispiel identisch ausgebildet. Geometrisch gesehen sind die beiden Teilgitter um die Kantenlänge $a_1$ in Richtung einer Blattzeile gegeneinander versetzt. Alternativ kann man auch sagen, dass die beiden Teilgitter um die Kantenlänge $a_2$ in senkrechter Richtung zur Richtung einer Blattzeile gegeneinander versetzt sind. Beide Teilgitter liegen in diesem Ausführungsbeispiel in einer Ebene. Vorliegend sei die in der Figur 1 sichtbare Oberfläche 3 die Fläche, die bei bestimmungsgemäßem Gebrauch des Brillenglases, welches auf der in der Figur 1 gezeigten Struktur basiert, dem Objekt zugewandt ist. Demzufolge ist dann die in der Figur 1 nicht sichtbare Oberfläche 4, diejenige die bei bestimmungsgemäßem Gebrauch des Brillenglases dem Auge des Brillenträgers zugewandt ist. Die objektseitige Oberfläche eines einzigen Volumenelements 1a, 1b, 1c ... 1t, 1u, 2a, 2b, 2c ... 2t, 2u, welches im vorliegenden skizzenhaften Ausführungsbeispiel jeweils eine plane Fläche darstellt liegt unter Berücksichtigung der obigen Größenangaben zwischen 100 $\mu$m$^2$ und 1 mm$^2$.

Makroskopisch gesehen fallen der durch das erste Teilgitter definierte Flächenbereich und der durch das zweite Teilgitter definierte Flächenbereich zusammen, so dass keine makroskopische Trennung besteht.

Wie derartige Gitterstrukturen hergestellt werden können, ist z.B. in der WO 2015/102938 A1 im Detail beschrieben. So erhält ein mit einem oder mehreren Prozessoren ausgestatteter 3D-Drucker ein CAD-Modell mit Daten, von im vorliegenden Ausführungsbeispiel zwei Schichten, welche jeweils für sich eine Vielzahl an Volumenelementen umfassen. So enthalten die Daten z.B. die Information, dass die vorstehend angegebenen ersten Volumenelemente 1a, 1b, 1c ... 1t, 1u aus einem ersten Material mit einer ersten Abbe-Zahl $v_1$ gefertigt werden sollen, was einer ersten Drucktinte entspricht und die Information, dass die vorstehend angegebenen zweiten Volumenelemente 2a, 2b, 2c ... 2t, 2u aus einem zweiten Material mit einer zweiten Abbe-Zahl $v_2$ gefertigt werden sollen, was einer zweiten Drucktinte entspricht. Der oder die Prozessoren des 3D-Druckers berechnen aus den Daten den jeweiligen Ort, an dem die jeweilige Drucktinte platziert werden soll, die Temperatur und/oder den UV-Lichtbedarf, sowie die entsprechenden Zeiten um die platzierte Drucktinte zur Generierung des jeweiligen Volumenelements 1a, 1b, 1c ... 1t, 1u, 2a, 2b, 2c ... 2t, 2u auszuhärten. Das erste Material sei im vorliegenden Ausführungsbeispiel PC, das zweite Material PMMA. Bei den beiden aufgeführten Substanzen handelt es sich um Thermoplasten, für deren Aushärten kein UV Licht benötigt wird.

Die Figur 2 zeigt ein weiteres Ausführungsbeispiel für eine durchsetzend ineinander verschobene Anordnung von Volumenelementen von Teilgittern. In diesem Ausführungsbeispiel wird das Gesamtgitter aus vier Teilgittern gebildet. Die vier Teilgitter umfassen Volumenelemente erster, zweiter, dritter und vierter Volumenelementgruppen. Das erste Teilgitter basierend auf den hexagonförmigen Volumenelementen 11a, 11b, 11c, 11d, das zweite Teilgitter basierend auf den hexagonförmigen Volumenelementen 12a, 12b, 12c, 12d, das dritte Teilgitter basierend auf den hexagonförmigen Volumenelementen 13a, 13b und das vierte Teilgitter basierend auf den hexagonförmigen Volumenelementen 14a, 14b sind im vorliegenden Ausführungsbeispiel identisch ausgebildet. Die Volumina der hexagonförmigen Volumenelemente 11a, 11b, 11c, 11d, 12a, 12b, 12c, 12d, 13a, 13b, 14a, 14b sind im Bereich zwischen 1000 $\mu m^3$ und 1 mm$^3$. Vorliegend sei die in der Figur 2 sichtbare Oberfläche 3 die Fläche, die bei bestimmungsgemäßem Gebrauch des Brillenglases, welches auf der in der Figur 2 gezeigten Struktur basiert, dem Objekt zugewandt ist. Demzufolge ist dann die in der Figur 2 nicht sichtbare Oberfläche 4, diejenige die bei bestimmungsgemäßem Gebrauch des Brillenglases dem Auge des Brillenträgers zugewandt ist. Das erste Material sei im vorliegenden Ausführungsbeispiel PET, das zweite Material PMMA, das dritte Material PC und das vierte Material PU.

Makroskopisch gesehen fallen der durch das erste Teilgitter definierte Flächenbereich, der durch das zweite Teilgitter definierte Flächenbereich, der durch das dritte Teilgitter definierte Flächenbereich und der durch das vierte Teilgitter definierte Flächenbereich zusammen, so dass keine makroskopische Trennung besteht.

Die Figur 3 zeigt ein zweites Ausführungsbeispiel für die durchsetzend ineinander verschobene Anordnung zweier aus Volumenelementen erster und zweiter Volumenelementgruppen gebildeter Teilgitter. Das erste Teilgitter basiert auf den ringsegmentförmigen Volumenelementen 21a, 21b, 21c, ..., welche in der Figur 3 schraffiert gezeichnet sind. Das zweite Teilgitter umfasst eine Mehrzahl an ringsegmentförmigen Volumenelementen 22a, 22b, 22c, ..., die in der Figur 3 weiß gezeichnet sind.

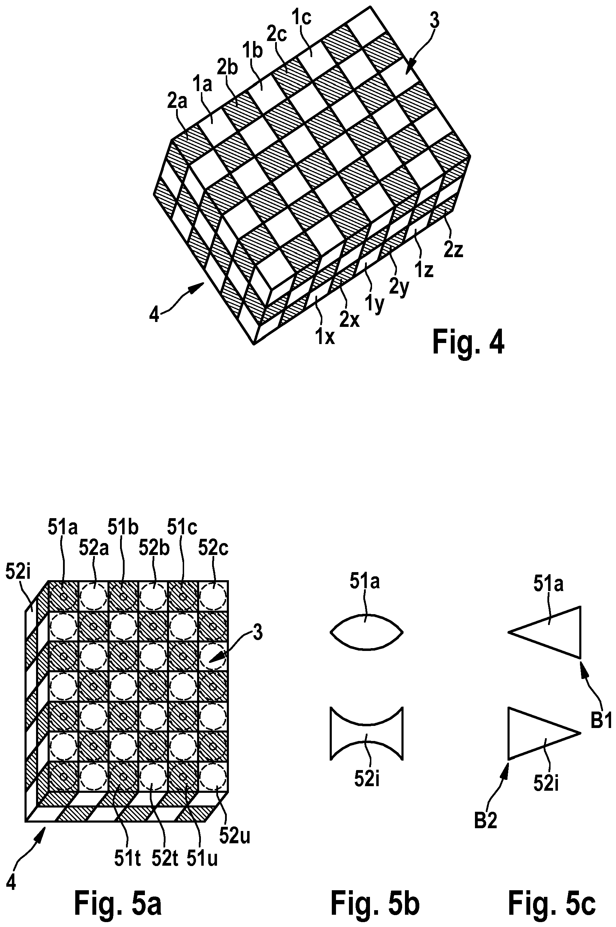

Die Figur 4 zeigt ein drittes Ausführungsbeispiel für die durchsetzend ineinander verschobene Anordnung zweier aus Volumenelementen erster und zweiter Volumenelementgruppen gebildeter Teilgitter.

Das erste Teilgitter basierend auf den Volumenelementen 1a, 1b, 1c ... 1x, 1y, 1z und das zweite Teilgitter basierend auf den Volumenelementen 2a, 2b, 2c ...2x, 2y, 2z sind im vorliegenden Ausführungsbeispiel identisch ausgebildet. Beide Teilgitter stellen eine Sequenz dreidimensionaler kubisch dargestellter Strukturen dar, deren jeweiligen Volumenelemente 1a, 1b, 1c ... 1x, 1y, 1z, 2a, 2b, 2c ...2x, 2y, 2z benachbart und ineinander verschachtelt angeordnet sind. Das finale Gitter umfasst demnach drei Schichten der unter Bezugnahme auf die Figur 1 beschriebenen Art. Vorliegend sei die in der Figur 4 sichtbare Oberfläche 3 die Fläche, die bei bestimmungsgemäßem Gebrauch des Brillenglases, welches auf der in der Figur 4 gezeigten Struktur basiert, dem Objekt zugewandt ist. Demzufolge ist dann die in der Figur 4 nicht sichtbare Oberfläche 4, diejenige, die bei bestimmungsgemäßem Gebrauch des Brillenglases dem Auge des Brillenträgers zugewandt ist.

Die Figur 5 zeigt ein viertes Ausführungsbeispiel für die durchsetzend ineinander verschobene Anordnung zweier aus Volumenelementen erster und zweiter Volumenelementgruppen gebildeter Teilgitter. Die Figur 5a zeigt die grundsätzliche Anordnung der Volumenelemente 51a, 51b, ... 51t, 51u, 52a, 52b, 52c, ... 52t, 52u in der Art eines dreidimensionalen zweilagigen Schachbrettmusters wie oben zur Figur 1 im Detail beschrieben. Vorliegend sei die in der Figur 5 sichtbare Oberfläche 3 die Fläche, die bei bestimmungsgemäßem Gebrauch des Brillenglases, welches auf der in der Figur 5 gezeigten Struktur basiert, dem Objekt zugewandt ist. Demzufolge ist dann die in der Figur 5 nicht sichtbare Oberfläche 4, diejenige, die bei bestimmungsgemäßem Gebrauch des Brillenglases dem Auge des Brillenträgers zugewandt ist. Weiter sei angenommen, dass die Oberfläche 3 einen Ausschnitt der tatsächlichen Vorderfläche des Brillenglases zeige und die Oberfläche 4 der entsprechende gegenüberliegende Ausschnitt der tatsächlichen Rückfläche des Brillenglases darstellt.

Ein von einem Objekt kommender Lichtstrahl wird beispielsweise auf der dem Objekt zugewandten Fläche des ersten Volumenelements 51a in das Brillenglas eintreten, das Volumenelement 51a durchsetzen, an dessen Rückseite wieder austreten, dabei durch die Vorderfläche des Volumenelements 52i in dasselbe eintreten, dieses durchsetzen und an dessen Rückseite austreten, um das Brillenglas rückseitig wieder zu verlassen und von dort in das Auge des Brillenträgers eintreten. Erfindungsgemäß sollen die beiden Volumenelemente 51a und 52i achromatisch zusammen wirken können. Die Figuren 5b und 5c zeigen zur Erzielung dieses Zwecks zwei vorteilhafte Ausgestaltungen für die Volumenelemente 51a und 52i.

Oben wurde erläutert, dass für ein achromatisches (oder ggf. apochromatisches) Zusammenwirken beispielsweise mehrere dispersive optische erste und zweite Volumenelemente, deren Form aufeinander abgestimmt ist, derart im Lichtweg hintereinander angeordnet werden können, dass sich die Farbzerstreuung des ersten Volumenelementes (oder der mehreren ersten Volumenelemente) durch die des zweiten Volumenelements (oder der mehreren zweiten Volumenelemente) wieder aufheben, ohne dass die Ablenkung selbst aufgehoben wird. Beispielhaft ist angegeben, dass diese als Prismenelemente oder als Linsenelemente ausgebildet sein können.

Die Figur 5b zeigt die Ausgestaltung der Volumenelemente 51a und 52i in Form von Linsenelementen. Das erste Volumenelement 51a ist nach diesem Ausführungsbeispiel als Mikrokonvexlinsenelement und das zweite Volumenelement 52i ist nach diesem Ausführungsbeispiel als Mikrokonkavlinsenelement ausgebildet. Im Idealfall müssen die Brennweiten und Abbe-Zahlen der beiden Linsenelemente 51a, 52i so aufeinander abgestimmt sein, dass die Achromasiebedingung (z.B. entsprechend obiger Näherungsformel) bestmöglich erfüllt ist.

Die Figur 5c zeigt die Ausgestaltung der Volumenelemente 51a und 52i in Form von Prismenelementen. Das erste Volumenelement 51a ist nach diesem Ausführungsbeispiel als Prismenelement mit der Basislage B1 und das zweite Volumenelement 52i ist nach diesem Ausführungsbeispiel als Prismenelement mit der Basislage B2 ausgebildet. Im Idealfall müssen die Basislagen und Prismenwirkungen der beiden Prismenelemente 51a, 52i so aufeinander abgestimmt sein, dass die Achromasiebedingung bestmöglich erfüllt ist. Die Basislagen B1, B2 der beiden Prismenelemente 51a, 52i sind einander gegenüberliegend angeordnet.

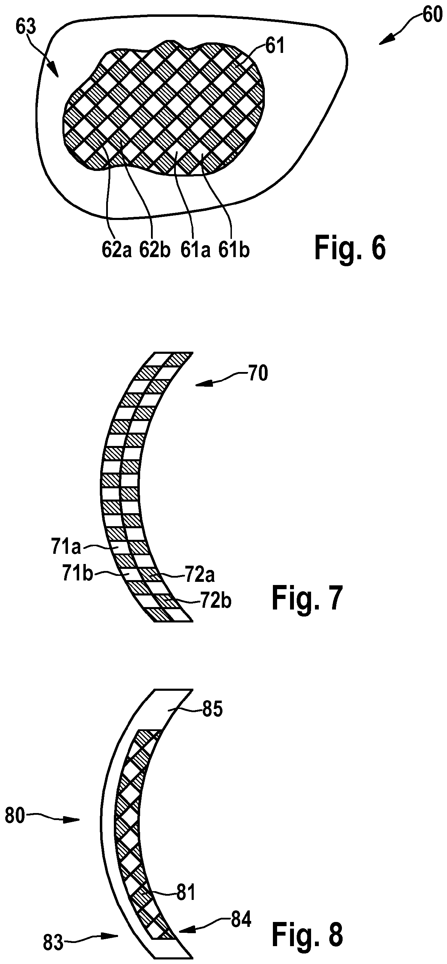

Die Figur 6 zeigt ein erstes Ausführungsbeispiel eines Brillenglases 60 in Draufsicht von der Objektseite in Form einer Prinzipskizze. Die sichtbare Oberfläche ist mit dem Bezugszeichen 63 gekennzeichnet. Das Ausführungsbeispiel weist einen Bereich 61 auf, der in der erfindungsgemäßen Form ausgebildet ist. Es ist eine verschachtelte Anordnung zweier Teilgitter in der Art eines "Schachbrettmusters" zu sehen, wie es in den Figuren 1 und 5a gezeigt ist. Volumenelemente des ersten Teilgitters sind exemplarisch mit den Bezugszeichen 61a, 61b und Volumenelemente des zweiten Teilgitters sind exemplarisch mit den Bezugszeichen 62a, 62b gekennzeichnet.

Die Figur 7 zeigt ein zweites Ausführungsbeispiel eines Brillenglases 70 im Querschnitt (Prinzipskizze). Das gesamte Brillenglas 70 besteht in diesem Ausführungsbeispiel aus einer erste Volumenelementgruppe mit einer Mehrzahl an ersten Volumenelementen 71a, 71b, die in der Art von Gitterpunkten eines geometrischen Gitters ein erstes Teilgitter bildend angeordnet sind und aus einer zweiten Volumenelementgruppe mit einer Mehrzahl an zweiten Volumenelementen 72a, 72b, die in der Art von Gitterpunkten eines geometrischen Gitters ein zweites Teilgitter bildend angeordnet sind. Die Ausführung entspricht im Grundsatz der in den Figuren 1 und 5a gezeigten Anordnung der beiden Teilgitter zueinander.

Die Figur 8 zeigt ein drittes Ausführungsbeispiel eines Brillenglases 80 im Querschnitt (als Prinzipskizze). Bei diesem Ausführungsbeispiel ist die erfindungsgemäße Struktur 81 auf der Rückseite (Augenseite) 84 eines transparenten Trägers 85 in Form einer vergrabenen Struktur aufgebracht. Die Vorderseite (Objektseite) 83 des Brillenglases 80 kann sphärisch, torisch, rotationssymmetrisch asphärisch oder asphärisch (z.B. als Freiformfläche) ausgeführt sein.

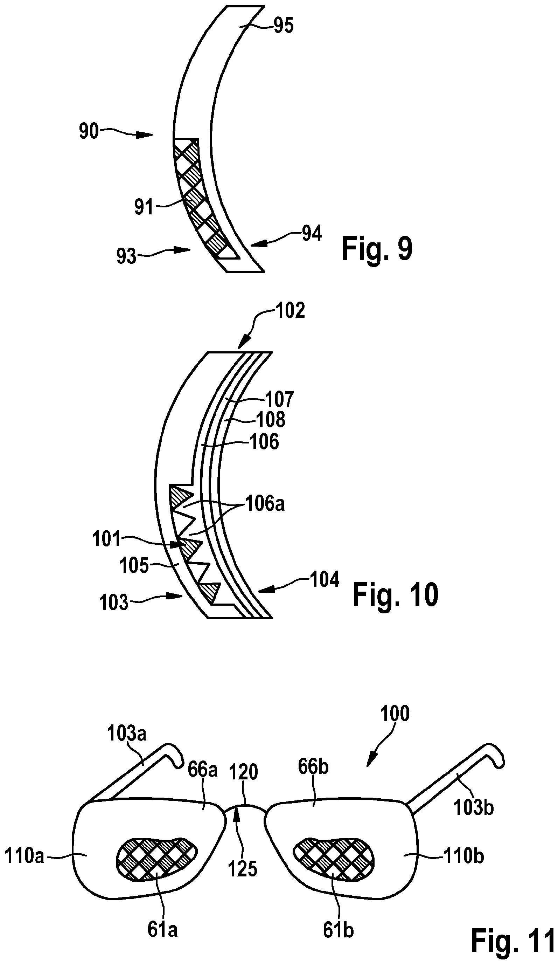

Der Figur 9 ist ein viertes Ausführungsbeispiel eines Brillenglases 90 im Querschnitt (in Form einer Prinzipskizze) zu entnehmen. Bei diesem Ausführungsbeispiel ist die erfindungsgemäße Struktur 91 auf der Vorderseite (Objektseite) 93 eines transparenten Trägers 95 in Form einer vergrabenen Struktur aufgebracht. Die Rückseite (Augenseite) 94 des Brillenglases 90 kann sphärisch, torisch oder asphärisch (z.B. als Freiformfläche) ausgeführt sein.

Auf einer oder beiden optisch wirksamen Flächen 83, 84, 93, 94 der Brillengläser 80, 90 können Beschichtungen, wie z.B. Hartschichten, Antireflexbeschichtungen, Antihaftbeschichtungen und dergleichen aufgebracht sein.

Die Figur 10 zeigt in Form einer Prinzipskizze ein fünftes Ausführungsbeispiel eines erfindungsgemäßen Brillenglases 102 im Querschnitt. Bei diesem Ausführungsbeispiel ist die erfindungsgemäße Struktur 101 auf einen Teil der Rückseite (Augenseite) 104 eines transparenten Trägers 105 in Form einer vergrabenen Struktur aufgebracht. Die Vorderseite (Augenseite) 103 des Brillenglases 102 kann sphärisch, torisch oder asphärisch (z.B. als Freiformfläche) ausgeführt sein. Auf der vergrabenen Struktur 101 ist eine glättende, auch die Zwischenräume 106a der vergrabenen Struktur verfüllende Hartschicht 106, eine Haftvermittlungsschicht 107 und eine aus einer Mehrzahl an Einzelschichten bestehende Antireflexbeschichtung 108 aufgebracht.

Es wird hiermit ausdrücklich darauf hingewiesen, dass auch Strukturen 101 sowohl vorne als auch hinten auf den Träger 105 aufgebracht sein können.

Ein Ausführungsbeispiel einer Brille 100 mit erfindungsgemäßen Brillengläsern 110a, 110b entnimmt man der Figur 11. Die Brille 100 umfasst neben den beiden Brillengläsern 110a, 110b eine Brillenfassung 120, von der die Brücke 125 und die beiden Bügel 130a, 130b gezeigt sind. Jedes Brillenglas 110a, 110b umfasst einen Träger 66a, 66b, welcher jeweils eine erfindungsgemäße Struktur 61a, 61b der in der Figur 6 gezeigten Art trägt. Sämtliche Bestandteile der Brille können mit Hilfe eines 3D-Druckverfahrens hergestellt sein.

**Patentansprüche**

1. Brillenglas (60, 70, 80, 90, 102, 110a, 110b) umfassend

- eine erste Volumenelementgruppe, wobei die erste Volumenelementgruppe eine Mehrzahl an ersten Volumenelementen (1a, 1b, ...; 11a, 11b, ...; 51a, 51b, ...; 61a, 61b; 71a, 71b) umfasst, wobei die Mehrzahl an ersten Volumenelementen (1a, 1b, ...; 11a, 11b, ...; 51a, 51b, ...; 61a, 61b; 71a, 71b) in der Art von Gitterpunkten eines geometrischen Gitters ein erstes Teilgitter bildend angeordnet ist, wobei die ersten Volumenelemente (1a, 1b, ...; 11a, 11b, ...; 51a, 51b, ...; 61a, 61b; 71a, 71b) aus einem ersten Material mit einer ersten Abbe-Zahl ($v_1$) bestehen,
**gekennzeichnet durch**
- eine zweite Volumenelementgruppe, wobei die zweite Volumenelementgruppe eine Mehrzahl an zweiten Volumenelementen (2a, 2b, ...; 12a, 12b, ...; 52a, 52b, ...; 62a, 62b; 72a, 72b) umfasst, wobei die Mehrzahl an zweiten Volumenelementen (2a, 2b, ...; 12a, 12b, ...; 52a, 52b, ...; 62a, 62b; 72a, 72b) in der Art von Gitterpunkten eines geometrischen Gitters ein zweites Teilgitter bildend angeordnet ist, wobei die zweiten Volumenelemente (2a, 2b, ...; 12a, 12b, ...; 52a, 52b, ...; 62a, 62b; 72a, 72b) aus einem zweiten Material mit einer zweiten Abbe-Zahl ($v_2$) bestehen,
wobei
- sich die erste Abbe-Zahl ($v_1$) und die zweite Abbe-Zahl ($v_2$) unterscheiden, und
- das erste Teilgitter und das zweite Teilgitter einander durchsetzend angeordnet sind
wobei
- die einzelnen ersten und zweiten Volumenelemente (1a, 1b, ...; 11a, 11b, ...; 51a, 51b, ...; 61a, 61b; 71a, 71b; 2a, 2b, ...; 12a, 12b, ...; 52a, 52b, ...; 62a, 62b; 72a, 72b) derart geformt und zueinander angeordnet sind, dass ein Quotient aus einem Farbquerfehler $\Delta\delta_{chrom}$ eines Vergleichsbrillenglases, welches ausschließlich aus dem ersten Material gefertigt ist und einem Farbquerfehler $\Delta\delta_{chrom}$ des Brillenglases (60, 70, 80, 90, 102, 110a, 110b) gleicher dioptrischer Wirkungsverteilung am gleichen Ort des Brillenglases (60, 70, 80, 90, 102, 110a, 110b) größer als ein Wert aus der nachfolgend angegebenen Gruppe ist, wobei die Gruppe die Werte 1, 2 und 3 umfasst.

2. Brillenglas (60, 70, 80, 90, 102, 110a, 110b) nach Anspruch 1, **dadurch gekennzeichnet, dass**

- die ersten Volumenelemente (1a, 1b, ...; 11a, 11b, ...; 51a, 51b, ...; 61a, 61b; 71a, 71b) der ersten Volumenelementgruppe und die zweiten Volumenelemente (2a, 2b, ...; 12a, 12b, ...; 52a, 52b, ...; 62a, 62b; 72a, 72b) der zweiten Volumenelementgruppe wenigstens teilweise achromatisch zusammenwirken.

3. Brillenglas (60, 70, 80, 90, 102, 110a, 110b) nach Anspruch 1 oder 2, **dadurch gekennzeichnet, dass**

- die erste Abbe-Zahl ($v_1$) kleiner als 40 ist und dass
- die zweite Abbe-Zahl ($v_2$) größer als 40 ist.

4. Brillenglas (60, 70, 80, 90, 102, 110a, 110b) nach einem der Ansprüche 1 bis 3, **dadurch gekennzeichnet, dass**

- das erste Material einen ersten Brechungsindex ($n_1$) aufweist und dass
- das zweite Material einen zweiten Brechungsindex ($n_2$) aufweist und dass
- der erste Brechungsindex ($n_1$) größer als der zweite Brechungsindex ($n_2$) ist.

5. Brillenglas (60, 70, 80, 90, 102, 110a, 110b) nach Anspruch 4, **dadurch gekennzeichnet, dass**

- das erste Material eines aus der Gruppe Polyethylenterephthalat (PET), Polycarbonat (PC), Polythiourethan (PTU) und Polyepisulfid ist und/oder dass
- das zweite Material eines aus der Gruppe Polymethyl(meth)acrylat (PMMA), Polyallyldiglycolcarbonat (PADC), Polyurethan (PU), Poly(meth)acrylat und Polyacrylat ist.

6. Brillenglas (60, 70, 80, 90, 102, 110a, 110b) nach Anspruch 4 oder 5, **dadurch gekennzeichnet, dass**

- das erste Material eines aus der Gruppe Polymethyl(meth)acrylat (PMMA), Polyallyldiglycolcarbonat (PADC), Polyurethan (PU), Polyacrylat, Polyethylenterephthalat (PET), Polycarbonat (PC), Polythiourethan (PTU), Polyepisulfid, Hexandioldiacrylat (HDODA), Diethylenglycoldiacrylat (DEGDA) und Bisphenol A Novolak Epoxy Harz (SU-8) ist mit einem ersten Zusatz einer ersten Konzentration von Nanopartikeln aus der Gruppe Beryllliumoxid (BeO), Aluminiumnitrid (AlN), Siliziumcarbid (SiC), Zinkoxid (ZnO), Zinksulfid (ZnS), Zirconiumoxid ($ZrO_2$), Yttrium Orthovanadat ($YVO_4$), Titandioxid ($TiO_2$), Kupfersulfid ($CuS_2$), Cadmiumselenid (CdSe), Bleisulfid (PbS), Molybdändisulfid ($MoS_2$) und Siliziumdioxid ($SiO_2$) ist und/oder dass

- das zweite Material eines aus der Gruppe Polymethyl(meth)acrylat (PMMA), Polyallyldiglycolcarbonat (PADC), Polyurethan (PU), Polyacrylat, Polyethylenterephthalat (PET), Polycarbonat (PC), Polythiourethan (PTU), Polyepisulfid, Hexandioldiacrylat (HDODA), Diethylenglycoldiacrylat (DEGDA) und Bisphenol A Novolak Epoxy Harz (SU-8) ist mit einem zweiten Zusatz einer zweiten Konzentration von Nanopartikeln aus der Gruppe Berylliumoxid (BeO), Aluminiumnitrid (AlN), Siliziumcarbid (SiC), Zinkoxid (ZnO), Zinksulfid (ZnS), Zirconiumoxid ($ZrO_2$), Yttrium Orthovanadat ($YVO_4$), Titandioxid ($TiO_2$), Kupfersulfid ($CuS_2$), Cadmiumselenid (CdSe), Bleisulfid (PbS), Molybdändisulfid ($MoS_2$) und Siliziumdioxid ($SiO_2$) ist.

7. Brillenglas (60, 70, 80, 90, 102, 110a, 110b) nach einem der vorangegangenen Ansprüche, **dadurch gekennzeichnet, dass**

- die ersten Volumenelemente (1a, 1b, ...; 11a, 11b, ...; 51a, 51b, ...; 61a, 61b; 71a, 71b) jeweils ein Volumen zwischen 1000 $\mu m^3$ und 1 $mm^3$ aufweisen und/oder dass
- die zweiten Volumenelemente (2a, 2b, ...; 12a, 12b, ...; 52a, 52b, ...; 62a, 62b; 72a, 72b) jeweils ein Volumen zwischen 1000 $\mu m^3$ und 1 $mm^3$ aufweisen.

8. Brillenglas (60, 70, 80, 90, 102, 110a, 110b) mit einer Vorderfläche (3) und einer Rückfläche (4) nach einem der vorangegangenen Ansprüche, **dadurch gekennzeichnet, dass**

- das erste Teilgitter ein dreidimensionales Gitter ist und dass die ersten Volumenelemente (51a, 51b, ...) jeweils eine zumindest näherungsweise prismatische Gestalt mit einer jeweils zugeordneten Prismenbasis (B1) aufweisen und dass
- das zweite Teilgitter ein dreidimensionales Gitter ist und dass die zweiten Volumenelemente (52a, 52b, ...) jeweils eine zumindest näherungsweise prismatische Gestalt mit einer jeweils zugeordneten Prismenbasis (B2) aufweisen und dass
- jeweils entlang einer kürzesten von der Rückfläche (4) zur Vorderfläche (3) verlaufenden gedachten linearen Linie mehrere der ersten und zweiten Volumenelemente (51a, 52i) hintereinander angeordnet sind, wobei die mehreren hintereinander angeordneten der ersten und zweiten Volumenelemente (51a, 52i) jeweils im Wechsel, nämlich jeweils eines der ersten Volumenelemente (51a) benachbart zu einem der zweiten Volumenelemente (52i), welches wiederum benachbart zu einem der ersten Volumenelemente usw., angeordnet sind und wobei die jeweilige Prismenbasis (B1) von einem der ersten Volumenelemente (51a) entgegengesetzt zu der jeweiligen Prismenbasis (B2) zu einem jeweils benachbarten der zweiten Volumenelemente (52i) angeordnet ist.

9. Brillenglas (60, 80, 90, 102, 110a, 110b) nach einem der vorangegangenen Ansprüche, **dadurch gekennzeichnet, dass**

- das Brillenglas (60, 80, 90, 102, 110a, 110b) einen Träger (63, 85, 95, 105, 66a, 66b) mit einer Fläche umfasst und dass
- die erste Volumenelementgruppe und die zweite Volumenelementgruppe auf der Fläche des Trägers (63, 85, 95, 105, 66a, 66b) angeordnet sind.

10. Brillenglas (60, 70, 80, 90, 102, 110a, 110b) nach Anspruch 9, **dadurch gekennzeichnet, dass**

- der Träger (85) eine objektseitige sphärische oder torische oder freigeformte Oberfläche aufweist und dass die Fläche, auf der die erste Volumenelementgruppe und die zweite Volumenelementgruppe angeordnet sind, die augenseitige Fläche des Trägers (85) ist oder dass
- der Träger (95, 105) eine augenseitige sphärische oder torische oder freigeformte Oberfläche aufweist und dass die Fläche, auf der die erste Volumenelementgruppe und die zweite Volumenelementgruppe angeordnet sind, die objektseitige Fläche des Trägers (95, 105) ist oder dass
- die Fläche, auf der die erste Volumenelementgruppe und die zweite Volumenelementgruppe angeordnet sind, die augenseitige und/oder die objektseitige Fläche des Trägers ist.

11. Brillenglas (60, 80, 90, 102, 110a, 110b) nach einem der vorangegangenen Ansprüche, **dadurch gekennzeichnet, dass** auf der ersten Volumenelementgruppe und der zweiten Volumenelementgruppe eine Beschichtung (106, 106a, 107, 108) angeordnet ist.

**12.** Computerimplementiertes Verfahren zum Auslegen eines Brillenglases (60, 80, 90, 102, 110a, 110b) mit den Schritten

- Bereitstellen einer virtuellen Repräsentanz einer ersten Volumenelementgruppe, wobei die erste Volumenelementgruppe eine Mehrzahl an ersten Volumenelementen (1a, 1b, ...; 11a, 11b, ...; 51a, 51b, ...; 61a, 61b; 71a, 71b) umfasst, wobei die Mehrzahl an ersten Volumenelementen (1a, 1b, ...; 11a, 11b, ...; 51a, 51b, ...; 61a, 61b; 71a, 71b) in der Art von Gitterpunkten eines geometrischen Gitters ein erstes Teilgitter bildend angeordnet ist, wobei die ersten Volumenelemente (1a, 1b, ...; 11a, 11b, ...; 51a, 51b, ...; 61a, 61b; 71a, 71b) aus einem ersten Material mit einer ersten Abbe-Zahl ($v_1$) bestehen,
- Bereitstellen einer virtuellen Repräsentanz einer zweiten Volumenelementgruppe, wobei die zweite Volumenelementgruppe eine Mehrzahl an zweiten Volumenelementen (2a, 2b, ...; 12a, 12b, ...; 52a, 52b, ...; 62a, 62b; 72a, 72b) umfasst, wobei die Mehrzahl an zweiten Volumenelementen (2a, 2b, ...; 12a, 12b, ...; 52a, 52b, ...; 62a, 62b; 72a, 72b) in der Art von Gitterpunkten eines geometrischen Gitters ein zweites Teilgitter bildend angeordnet ist, wobei die zweiten Volumenelemente (2a, 2b, ...; 12a, 12b, ...: 52a, 52b, ...; 62a, 62b; 72a, 72b) aus einem zweiten Material mit einer zweiten Abbe-Zahl ($v_2$) bestehen, wobei
- sich die erste Abbe-Zahl ($v_1$) und die zweite Abbe-Zahl ($v_2$) unterscheiden, und
- das erste Teilgitter und das zweite Teilgitter einander durchsetzend angeordnet sind
wobei
- ein Lichtweg durch das Brillenglas (60, 80, 90, 102, 110a, 110b) hindurch vorgegeben wird, und
- die ersten und zweiten Volumenelemente (1a, 1b, ...; 11a, 11b, ...; 51a, 51b, ...; 61a, 61b; 71a, 71b; 2a, 2b, ...; 12a, 12b, ...; 52a, 52b, ...; 62a, 62b; 72a, 72b) derart angeordnet werden, dass sie in dem vorgegebenen Lichtweg durch das Brillenglas (60, 80, 90, 102, 110a, 110b) hindurch wenigstens teilweise achromatisch zusammenwirken.

**13.** Verfahren nach Anspruch 12, **dadurch gekennzeichnet, dass** diejenigen der ersten und zweiten Volumenelemente (51a, 52i), die auf dem vorgegebenen Lichtweg durch das Brillenglas (60, 80, 90, 102, 110a, 110b) hindurch hintereinander angeordnet werden, als Prismenelemente (51a, 52i) oder als Linsenelemente (51a, 52i) ausgebildet werden.

**14.** Auf einen Datenträger abgespeichertes und durch ein Verfahren nach Anspruch 12 oder 13 generiertes Modell eines Brillenglases (60, 80, 90, 102, 110a, 110b) nach einem der Ansprüche 1 bis 11

**15.** Computerprogramm mit Programmcode zur Durchführung aller Verfahrensschritte nach Anspruch 12 oder 1 3, wenn das Computerprogramm in einem Computer geladen und/oder in einem Computer ausgeführt wird.

**16.** Verfahren nach einem der Ansprüche 12 oder 13, **gekennzeichnet durch** den Schritt

- additives Fertigen der ersten und zweiten Volumenelementgruppe.

**17.** Verfahren nach Anspruch 16, **gekennzeichnet durch** den Schritt

- additives Fertigen eines Trägers (63, 85, 95, 105, 66a, 66b) mit einer Fläche, auf der die erste Volumenelementgruppe und die zweite Volumenelementgruppe angeordnet werden.

**Claims**

**1.** Spectacle lens (60, 70, 80, 90, 102, 110a, 110b), comprising

- a first volume element group, wherein the first volume element group comprises a plurality of first volume elements (1a, 1b,...; 11a, 11b,...; 51a, 51b, ...; 61a, 61b; 71a, 71b), wherein the plurality of first volume elements (1a, 1b,...; 11a, 11b,...; 51a, 51b,...; 61a, 61b; 71a, 71b) is arranged in the style of grid points of a geometric grid forming a first partial grid, wherein the first volume elements (1a, 1b,...; 11a, 11b,...; 51a, 51b,...; 61a, 61b; 71a, 71b) consist of a first material with a first Abbe number ($v_1$), **characterized by**
- a second volume element group, wherein the second volume element group comprises a plurality of second volume elements (2a, 2b,...; 12a, 12b,...; 52a, 52b,...; 62a, 62b; 72a, 72b), wherein the plurality of second volume elements (2a, 2b,...; 12a, 12b,...; 52a, 52b,...; 62a, 62b; 72a, 72b) is arranged in the style of grid points of a geometric grid forming a second partial grid, wherein the second volume elements (2a, 2b,...; 12a, 12b,...; 52a, 52b,...; 62a, 62b; 72a, 72b) consist of a second material with a second Abbe number ($v_2$),
wherein
- the first Abbe number ($v_1$) and the second Abbe number ($v_2$) differ from one another, and
- the first partial grid and the second partial grid are arranged penetrating one another,
wherein
- the individual first and second volume elements (1a, 1b,...; 11a, 11b,...; 51a, 51b,...; 61a, 61b; 71a, 71b; 2a, 2b,...; 12a, 12b,...; 52a, 52b,...; 62a, 62b; 72a, 72b) are formed and arranged in relation to one another in such a way that a quotient $\Delta\delta_{chrom}$ of a transverse chromatic aberration of a comparison spectacle lens, which is manufactured exclusively from the first material, and a transverse chromatic aberration $\Delta\delta_{chrom}$ of the spectacle lens (60, 70, 80, 90, 102, 110a, 110b) with the same dioptric power distribution, at the same location on the spectacle lens (60, 70, 80, 90, 102, 110a, 110b), is greater than a value from the group specified below, wherein the group comprises the values of 1, 2 and 3.

2. Spectacle lens (60, 70, 80, 90, 102, 110a, 110b) according to Claim 1, **characterized in that**

   - the first volume elements (1a, 1b,...; 11a, 11b,...; 51a, 51b,...; 61a, 61b; 71a, 71b) of the first volume element group and the second volume elements (2a, 2b,...; 12a, 12b,...; 52a, 52b,...; 62a, 62b; 72a, 72b) of the second volume element group at least partly interact in achromatic fashion.

3. Spectacle lens (60, 70, 80, 90, 102, 110a, 110b) according to Claim 1 or 2, **characterized in that**

   - the first Abbe number ($v_1$) is less than 40 and **in that**
   - the second Abbe number ($v_2$) is greater than 40.

4. Spectacle lens (60, 70, 80, 90, 102, 110a, 110b) according to any one of Claims 1 to 3, **characterized in that**

   - the first material has a first refractive index ($n_1$) and **in that**
   - the second material has a second refractive index ($n_2$) and **in that**
   - the first refractive index ($n_1$) is greater than the second refractive index ($n_2$).

5. Spectacle lens (60, 70, 80, 90, 102, 110a, 110b) according to Claim 4, **characterized in that**

   - the first material is from the group of polyethylene terephthalate (PET), polycarbonate (PC), polythiourethane (PTU) and polyepisulphide and/or in that
   - the second material is from the group of polymethyl(meth)acrylate (PMMA), polyallyldiglycol carbonate (PADC), polyurethane (PU), poly(meth)acrylate and polyacrylate.

6. Spectacle lens (60, 70, 80, 90, 102, 110a, 110b) according to Claim 4 or 5, **characterized in that**

   - the first material is from the group of polymethyl(meth)acrylate (PMMA), polyallyldiglycol carbonate (PADC), polyurethane (PU), polyacrylate, polyethylene terephthalate (PET), polycarbonate (PC), polythiourethane (PTU), polyepisulphide, hexanediol diacrylate (HDODA), diethylene glycol diacrylate (DEGDA) and bisphenol A novolac epoxy resin (SU-8), with a first addition of a first concentration of nanoparticles from the group of beryllium oxide (BeO), aluminium nitride (AlN), silicon carbide (SiC), zinc oxide (ZnO), zinc sulphide (ZnS), zirconium oxide ($ZrO_2$), yttrium orthovanadate ($YVO_4$), titanium dioxide ($TiO_2$), copper sulphide ($CuS_2$), cadmium selenide (CdSe), lead sulphide (PbS), molybdenum sulphide ($MoS_2$) and silicon dioxide ($SiO_2$) and/or **in that**
   - the second material is from the group of polymethyl(meth)acrylate (PMMA), polyallyldiglycol carbonate (PADC), polyurethane (PU), polyacrylate, polyethylene terephthalate (PET), polycarbonate (PC), polythiourethane (PTU), polyepisulphide, hexanediol diacrylate (HDODA), diethylene glycol diacrylate (DEGDA) and bisphenol A novolac epoxy resin (SU-8), with a second addition of a second concentration of nanoparticles from the group of beryllium oxide (BeO), aluminium nitride (AlN), silicon carbide (SiC), zinc oxide (ZnO), zinc sulphide (ZnS), zirconium oxide ($ZrO_2$), yttrium orthovanadate ($YVO_4$), titanium dioxide ($TiO_2$), copper sulphide ($CuS_2$), cadmium selenide (CdSe), lead sulphide (PbS), molybdenum sulphide ($MoS_2$) and silicon dioxide ($SiO_2$).

7. Spectacle lens (60, 70, 80, 90, 102, 110a, 110b) according to any one of the preceding claims, **characterized in that**

- the first volume elements (1a, 1b,...; 11a, 11b,...; 51a, 51b,...; 61a, 61b; 71a, 71b) each have a volume of between 1000 $\mu$m$^3$ and 1 mm$^3$ and/or **in that**
- the second volume elements (2a, 2b,...; 12a, 12b,...; 52a, 52b,...; 62a, 62b; 72a, 72b) each have a volume of between 1000 $\mu$m$^3$ and 1 mm$^3$.

8.  Spectacle lens (60, 70, 80, 90, 102, 110a, 110b) with a front surface (3) and a back surface (4) according to any one of the preceding claims, **characterized in that**

- the first partial grid is a three-dimensional grid and **in that** the first volume elements (51a, 51b,...) each have an at least approximately prismatic form with a respectively assigned prism base (B1) and **in that**
- the second partial grid is a three-dimensional grid and **in that** the second volume elements (52a, 52b,...) each have an at least approximately prismatic form with a respectively assigned prism base (B2) and **in that**
- a plurality of the first and second volume elements (51a, 52i) are in each case arranged in succession along the shortest imagined linear line extending from the back surface (4) to the front surface (3), wherein the plurality of successively arranged ones of the first and second volume elements (51a, 52i) are in each case arranged alternately, namely one of the first volume elements (51a) is in each case arranged adjacent to one of the second volume elements (52i), which in turn is arranged adjacent to one of the first volume elements, etc., and wherein the respective prism base (B1) of one of the first volume elements (51a) is arranged counter to the respective prism base (B2) in relation to one of the respectively adjacent ones of the second volume elements (52i).

9.  Spectacle lens (60, 80, 90, 102, 110a, 110b) according to any one of the preceding claims, **characterized in that**

- the spectacle lens (60, 80, 90, 102, 110a, 110b) comprises a carrier (63, 85, 95, 105, 66a, 66b) with a face and **in that**
- the first volume element group and the second volume element group arranged on the face of the carrier (63, 85, 95, 105, 66a, 66b).

10. Spectacle lens (60, 70, 80, 90, 102, 110a, 110b) according to Claim 9, **characterized in that**

- the carrier (85) has an object-side spherical or toric or free-form surface and **in that** the face on which the first volume element group and the second volume element group are arranged is the eye-side face of the carrier (85) or **in that**
- the carrier (95, 105) has an eye-side spherical or toric or free-form surface and **in that** the face on which the first volume element group and the second volume element group are arranged is the object-side face of the carrier (95, 105) or **in that**
- the face on which the first volume element group and the second volume element group are arranged is the eye-side and/or the object-side face of the carrier.

11. Spectacle lens (60, 80, 90, 102, 110a, 110b) according to any one of the preceding claims, **characterized in that** a coat (106, 106a, 107, 108) is arranged on the first volume element group and the second volume element group.

12. Computer-implemented method for designing a spectacle lens (60, 80, 90, 102, 110a, 110b), including the steps of

- providing a virtual representation of a first volume element group, wherein the first volume element group comprises a plurality of first volume elements (1a, 1b,...; 11a, 11b,...; 51a, 51b,...; 61a, 61b; 71a, 71b), wherein the plurality of first volume elements (1a, 1b,...; 11a, 11b,...; 51a, 51b,...; 61a, 61b; 71a, 71b) is arranged in the style of grid points of a geometric grid forming a first partial grid, wherein the first volume elements (1a, 1b,...; 11a, 11b,...; 51a, 51b,...; 61a, 61b; 71a, 71b) consist of a first material with a first Abbe number ($v_1$),
- providing a virtual representation of a second volume element group, wherein the second volume element group comprises a plurality of second volume elements (2a, 2b,...; 12a, 12b,...; 52a, 52b,...; 62a, 62b; 72a, 72b), wherein the plurality of second volume elements (2a, 2b,...; 12a, 12b,...; 52a, 52b,...; 62a, 62b; 72a, 72b) is arranged in the style of grid points of a geometric grid forming a second partial grid, wherein the second volume elements (2a, 2b,...; 12a, 12b,...; 52a, 52b,...; 62a, 62b; 72a, 72b) consist of a second material with a second Abbe number ($v_2$), wherein
- the first Abbe number ($v_1$) and the second Abbe number ($v_2$) differ from one another, and
- the first partial grid and the second partial group are arranged penetrating one another, wherein

- a light path through the spectacle lens (60, 80, 90, 102, 110a, 110b) is predetermined and
- the first and second volume elements (1a, 1b,...; 11a, 11b,...; 51a, 51b,...; 61a, 61b; 71a, 71b; 2a, 2b,...; 12a, 12b,...; 52a, 52b,...; 62a, 62b; 72a, 72b) are arranged in such a way that, along the predetermined light path through the spectacle lens (60, 80, 90, 102, 110a, 110b), they at least partly interact in achromatic fashion.

13. Method according to Claim 12, **characterized in that** those of the first and second volume elements (51a, 52i) that are arranged in succession along the predetermined light path through the spectacle lens (60, 80, 90, 102, 110a, 110b) are embodied as prism elements (51a, 52i) or as lens elements (51a, 52i).

14. Model of a spectacle lens (60, 80, 90, 102, 110a, 110b) according to any one of Claims 1 to 11, stored on a data medium and generated by a method according to Claim 12 or 13.

15. Computer program having program codes for carrying out all method steps according to Claim 12 or 13 when the computer program is loaded onto a computer and/or executed on a computer.

16. Method according to either of Claims 12 and 13, **characterized by** the step of

- additive manufacturing of the first and second volume element group.

17. Method according to Claim 16, **characterized by** the step of

- additive manufacturing of a carrier (63, 85, 95, 105, 66a, 66b) with a face, on which the first volume element group and the second volume element group are arranged.

## Revendications

1. Verre de lunettes (60, 70, 80, 90, 102, 110a, 110b) comprenant :

- un premier groupe d'éléments volumiques, le premier groupe d'éléments volumiques comprenant une pluralité de premiers éléments volumiques (1a, 1b, ... ; 11a, 11b, ... ; 51a, 51b, ... ; 61a, 61b ; 71a, 71b) la pluralité de premiers éléments volumiques (1a, 1b, ... ; 11a, 11b, ... ; 51a, 51b, ... ; 61a, 61b ; 71a, 71b) étant disposés à la manière de points de grille d'une grille géométrique en formant une première grille partielle, les premiers éléments volumiques (1a, 1b, ... ; 11a, 11b, ... ; 51a, 51b, ... ; 61a, 61b ; 71a, 71b) se composant d'un premier matériau ayant un premier nombre d'Abbe ($v_1$), **caractérisé par**
- un deuxième groupe d'éléments volumiques, le deuxième groupe d'éléments volumiques comprenant une pluralité de deuxièmes éléments volumiques (2a, 2b, ... ; 12a, 12b, ... ; 52a, 52b, ... ; 62a, 62b ; 72a, 72b), la pluralité de deuxièmes éléments volumiques (2a, 2b, ... ; 12a, 12b, ... ; 52a, 52b, ... ; 62a, 62b ; 72a, 72b) étant disposés à la manière de points de grille d'une grille géométrique en formant une deuxième grille partielle, les deuxièmes éléments volumiques (2a, 2b, ... ; 12a, 12b, ... ; 52a, 52b, ... ; 62a, 62b ; 72a, 72b) se composant d'un deuxième matériau ayant un deuxième nombre d'Abbe ($v_2$),
- le premier nombre d'Abbe ($v_1$) et le deuxième nombre d'Abbe ($v_2$) étant différents, et
- la première grille partielle et la deuxième grille partielle étant disposées de manière à s'interpénétrer,
- les premiers et deuxièmes éléments volumiques individuels (1a, 1b, ... ; 11a, 11b, ... ; 51a, 51b, ... ; 61a, 61b ; 71a, 71b ; 2a, 2b, ... ; 12a, 12b, ... ; 52a, 52b, ... ; 62a, 62b ; 72a, 72b) étant formés et disposés les uns par rapport aux autres de telle sorte qu'un quotient d'une aberration chromatique $\Delta\delta_{chrom}$ d'un verre de lunettes comparatif, qui est fabriqué exclusivement à partir du premier matériau, et d'une aberration chromatique $\Delta\delta_{chrom}$ du verre de lunettes (60, 70, 80, 90, 102, 110a, 110b) de même distribution des effets dioptriques au même endroit du verre de lunettes (60, 70, 80, 90, 102, 110a, 110b) soit supérieurs à une valeur appartenant au groupe indiqué ci-dessous, le groupe comprenant les valeurs 1, 2 et 3.

2. Verre de lunettes (60, 70, 80, 90, 102, 110a, 110b) selon la revendication 1, **caractérisé en ce que**

- les premiers éléments volumiques (1a, 1b, ... ; 11a, 11b, ... ; 51a, 51b, ... ; 61a, 61b ; 71a, 71b) du premier groupe d'éléments volumiques et les deuxièmes éléments volumiques (2a, 2b, ... ; 12a, 12b, ... ; 52a, 52b, ... ; 62a, 62b ; 72a, 72b) du deuxième groupe d'éléments volumiques coopèrent au moins en partie de manière achromatique.

3. Verre de lunettes (60, 70, 80, 90, 102, 110a, 110b) selon la revendication 1 ou 2, **caractérisé en ce que**

   - le premier nombre d'Abbe ($v_1$) est inférieur à 40 et **en ce que**
   - le deuxième nombre d'Abbe ($v_2$) est supérieur à 40.

4. Verre de lunettes (60, 70, 80, 90, 102, 110a, 110b) selon l'une quelconque des revendications 1 à 3, **caractérisé en ce que**

   - le premier matériau présente un premier indice de réfraction ($\eta_1$) et **en ce que**
   - le deuxième matériau présent une deuxième indice de réfraction ($\eta_2$) et **en ce que**
   - le premier indice de réfraction ($\eta_1$) est supérieur au deuxième indice de réfraction ($\eta_2$).

5. Verre de lunettes (60, 70, 80, 90, 102, 110a, 110b) selon la revendication 4, **caractérisé en ce que**

   - le premier matériau est l'un parmi le groupe comprenant le polyéthylène téréphtalate (PET), le polycarbonate (PC), le polythiouréthane (PTU) et le polyépisulfure et/ou **en ce que**
   - le deuxième matériau est l'un parmi le groupe comprenant le polyméthyl(méth)acrylate (PMMA), le polyallyldiglycolcarbonate (PADC), le polyuréthane (PU), le poly(méth)acrylate et le polyacrylate.

6. Verre de lunettes (60, 70, 80, 90, 102, 110a, 110b) selon la revendication 4 ou 5, **caractérisé en ce que**

   - le premier matériau est l'un parmi le groupe comprenant le polyméthyl(méth)acrylate (PMMA), le polyallyldiglycolcarbonate (PADC), le polyuréthane (PU), le polyacrylate, le polyéthylène téréphtalate (PET), le polycarbonate (PC), le polythiouréthane (PTU), le polyépisulfure, l'hexanedioldiacrylate (HDODA), le diéthylèneglycoldiacrylate (DEGDA) et la résine époxy Novolak à base de bisphénol A (SU-8), avec une première addition d'une première concentration de nanoparticules du groupe comprenant l'oxyde de béryllium (BeO), le nitrure d'aluminium (AlN), le carbure de silicium (SiC), l'oxyde de zinc (ZnO), le sulfure de zinc (ZnS), l'oxyde de zirconium ($ZrO_2$), l'orthovanadate d'yttrium ($YVO_4$), le dioxyde de titane ($TiO_2$), le sulfure de cuivre ($CuS_2$), le séléniure de cadmium (CdSe), le sulfure de plomb (PbS), le sulfure de molybdène ($MoS_2$) et le dioxyde de silicium ($SiO_2$) et/ou **en ce que**
   - le deuxième matériau est l'un parmi le groupe comprenant le polyméthyl(méth)acrylate (PMMA), le polyallyldiglycolcarbonate (PADC), le polyuréthane (PU), le polyacrylate, le polyéthylène téréphtalate (PET), le polycarbonate (PC), le polythiouréthane (PTU), le polyépisulfure, l'hexanedioldiacrylate (HDODA), le diéthylèneglycoldiacrylate (DEGDA) et la résine époxy Novolak à base de bisphénol A (SU-8), avec une deuxième addition d'une deuxième concentration de nanoparticules du groupe comprenant l'oxyde de béryllium (BeO), le nitrure d'aluminium (AlN), le carbure de silicium (SiC), l'oxyde de zinc (ZnO), le sulfure de zinc (ZnS), l'oxyde de zirconium ($ZrO_2$), l'orthovanadate d'yttrium ($YVO_4$), le dioxyde de titane ($TiO_2$), le sulfure de cuivre ($CuS_2$), le séléniure de cadmium (CdSe), le sulfure de plomb (PbS), le sulfure de molybdène ($MoS_2$) et le dioxyde de silicium ($SiO_2$).

7. Verre de lunettes (60, 70, 80, 90, 102, 110a, 110b) selon l'une quelconque des revendications précédentes, **caractérisé en ce que**

   - les premiers éléments volumiques (1a, 1b, ... ; 11a, 11b, ... ; 51a, 51b, ... ; 61a, 61b ; 71a, 71b) présentent à chaque fois un volume compris entre 1000 $\mu$m$^3$ et 1 mm$^3$ et/ou **en ce que**
   - les deuxièmes éléments volumiques (2a, 2b, ... ; 12a, 12b, ... ; 52a, 52b, ... ; 62a, 62b ; 72a, 72b) présentent à chaque fois un volume compris entre 1000 $\mu$m$^3$ et 1 mm$^3$.

8. Verre de lunettes (60, 70, 80, 90, 102, 110a, 110b) comprenant une face avant (3) et une face arrière (4) selon l'une quelconque des revendications précédentes, **caractérisé en ce que**

   - la première grille partielle est une grille tridimensionnelle et **en ce que** les premiers éléments volumiques (51a, 51b, ...) présentent à chaque fois une forme au moins approximativement prismatique avec une base de prisme respective associée (B1) et **en ce que**
   - la deuxième grille partielle est une grille tridimensionnelle et **en ce que** les deuxièmes éléments volumiques (52a, 52b, ...) présentent à chaque fois une forme au moins approximativement prismatique avec une base de prisme respective associée (B2) et **en ce que**
   - à chaque fois le long d'une ligne linéaire imaginaire la plus courte s'étendant depuis la face arrière (4) jusqu'à la face avant (3), plusieurs des premiers et deuxièmes éléments volumiques (51a, 52i) sont disposés les uns derrière les autres, la pluralité d'éléments disposés les uns derrière les autres parmi les premiers et deuxièmes éléments volumiques (51a, 52i) étant disposés à chaque fois en alternance, à savoir à chaque fois l'un des premiers éléments volumiques (51a) étant adjacent à l'un des deuxièmes éléments volumiques (52i), lequel est à son tour adjacent à l'un des premiers éléments volumiques, etc., et la base de prisme respective (B1) de l'un des premiers éléments volumiques (51a) étant disposée à l'opposé de la base de prisme respective (B2) vers l'un respectif, adjacent, des deuxièmes éléments volumiques (52i).

9. Verre de lunettes (60, 80, 90, 102, 110a, 110b) selon l'une quelconque des revendications précédentes, **caractérisé en ce que**

- le verre de lunettes (60, 80, 90, 102, 110a, 110b) comprend un support (63, 85, 95, 105, 66a, 66b) avec une surface et **en ce que**
- le premier groupe d'éléments volumiques et le deuxième groupe d'éléments volumiques sont disposés sur la surface du support (63, 85, 95, 105, 66a, 66b).

10. Verre de lunettes (60, 70, 80, 90, 102, 110a, 110b) selon la revendication 9, **caractérisé en ce que**

- le support (85) présente une surface côté objet sphérique ou torique ou de forme libre et **en ce que** la surface sur laquelle sont disposés le premier groupe d'éléments volumiques et le deuxième groupe d'éléments volumiques est la surface du support (85) du côté des yeux ou **en ce que**
- le support (95, 105) présente une surface du côté des yeux sphérique ou torique ou de forme libre et **en ce que** la surface sur laquelle sont disposés le premier groupe d'éléments volumiques et le deuxième groupe d'éléments volumiques est la surface côté objet du support (95, 105) ou **en ce que**
- la surface sur laquelle le premier groupe d'éléments volumiques et le deuxième groupe d'éléments volumiques sont disposés est la surface du côté des yeux et/ou côté objet du support.

11. Verre de lunettes (60, 80, 90, 102, 110a, 110b) selon l'une quelconque des revendications précédentes, **caractérisé en ce qu'**un revêtement (106, 106a, 107, 108) est disposé sur le premier groupe d'éléments volumiques et sur le deuxième groupe d'éléments volumiques.

12. Procédé exécuté sur ordinateur pour concevoir un verre de lunettes (60, 80, 90, 102, 110a, 110b), comprenant les étapes suivantes :

- fournir un représentant virtuel d'un premier groupe d'éléments volumiques, le premier groupe d'éléments volumiques comprenant une pluralité de premiers éléments volumiques (1a, 1b, ... ; 11a, 11b, ... ; 51a, 51b, ... ; 61a, 61b ; 71a, 71b), la pluralité de premiers éléments volumiques (1a, 1b, ... ; 11a, 11b, ... ; 51a, 51b, ... ; 61a, 61b ; 71a, 71b) étant disposés à la manière de points de grille d'une grille géométrique en formant une première grille partielle, les premiers éléments volumiques (1a, 1b, ... ; 11a, 11b, ... ; 51a, 51b, ... ; 61a, 61b ; 71a, 71b) se composant d'un premier matériau ayant un premier nombre d'Abbe ($v_1$),
- fournir un représentant virtuel d'un deuxième groupe d'éléments volumiques, le deuxième groupe d'éléments volumiques comprenant une pluralité de deuxièmes éléments volumiques (2a, 2b, ... ; 12a, 12b, ... ; 52a, 52b, ... ; 62a, 62b ; 72a, 72b), la pluralité de deuxièmes éléments volumiques (2a, 2b, ... ; 12a, 12b, ... ; 52a, 52b, ... ; 62a, 62b ; 72a, 72b) étant disposés à la manière de points de grille d'une grille géométrique en formant une deuxième grille partielle, les deuxièmes éléments volumiques (2a, 2b, ... ; 12a, 12b, ... ; 52a, 52b, ... ; 62a, 62b ; 72a, 72b) se composant d'un deuxième matériau ayant un deuxième nombre d'Abbe ($v_2$),
- le premier nombre d'Abbe ($v_1$) et le deuxième nombre d'Abbe ($v_2$) étant différents, et
- la première grille partielle et la deuxième grille partielle étant disposées de manière à s'interpénétrer,
- un chemin de lumière à travers le verre de lunettes (60, 80, 90, 102, 110a, 110b) étant prédéfini, et
- les premiers et deuxièmes éléments volumiques (1a, 1b, ... ; 11a, 11b, ... ; 51a, 51b, ... ; 61a, 61b ; 71a, 71b ; 2a, 2b, ... ; 12a, 12b, ... ; 52a, 52b, ... ; 62a, 62b ; 72a, 72b) étant disposés de telle sorte qu'ils coopèrent au moins en partie de manière achromatique dans le chemin de lumière prédéfini à travers le verre de lunettes (60, 80, 90, 102, 110a, 110b).

13. Procédé selon la revendication 1, **caractérisé en ce que** ceux parmi les premiers et les deuxièmes éléments volumiques (51a, 52i) qui sont disposés les uns derrière les autres sur le chemin de lumière prédéfini à travers le verre de lunettes (60, 80, 90, 102, 110a, 110b) sont réalisés sous forme d'éléments de prisme (51a, 52i) ou sous forme d'éléments de lentille (51a, 52i).

**14.** Modèle, mémorisé sur un support de données et généré par un procédé selon la revendication 12 ou 13, d'un verre de lunettes (60, 80, 90, 102, 110a, 110b) selon l'une quelconque des revendications 1 à 11.

**15.** Programme informatique avec un code de programme pour exécuter toutes les étapes de procédé selon la revendication 12 ou 13, lorsque le programme informatique est chargé dans un ordinateur et/ou est exécuté dans un ordinateur.

**16.** Procédé selon l'une quelconque des revendications 12 ou 13, **caractérisé par** l'étape suivante :

   - fabrication additive du premier et du deuxième groupe d'éléments volumiques.

**17.** Procédé selon la revendication 16, **caractérisé par** l'étape suivante :

   - fabrication additive d'un support (63, 85, 95, 105, 66a, 66b) avec une surface sur laquelle sont disposés le premier groupe d'éléments volumiques et le deuxième groupe d'éléments volumiques.

**Fig. 1**

**Fig. 2**

**Fig. 3**

Fig. 4

Fig. 5a

Fig. 5b

Fig. 5c

63    61    60

62a 62b 61a 61b    **Fig. 6**

70

71a
71b    72a
72b    **Fig. 7**

85

80    81    84

83    **Fig. 8**

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2692941 A1
- DE 3007572 C2
- US 6103148 A
- JP 2008191186 A
- EP 0955147 A1
- WO 10109154 A1
- WO 0155752 A1
- DE 102008041869 A1
- GB 487546 A
- DE 102010047846 A1
- DE 102012102743 A1
- WO 2014179780 A1
- US 20150361286 A1
- WO 2015102938 A1
- US 20130003186 A1
- DE 102009004377 A1
- US 20160039208 A1
- WO 2015014381 A1
- US 2005046957 A1

**In der Beschreibung aufgeführte Nicht-Patentliteratur**

- Optik und Technik der Brille. Optische Fach-veröffentlichung GmbH, 2005
- **VOLKER WITT.** Wie funktionieren Achromat und Apochromat? Teil 1: Von der Einzellinse zum Achromaten. *Sterne und Weltraum,* Oktober 2005, 72-75
- **VOLKER WITT.** Wie funktionieren Achromat und Apochromat? Teil 2: Vom Achromaten zum Apochromaten. *Sterne und Weltraum,* Dezember 2005, 76-79
- **W. N. CHARMAN.** Hybrid diffractive-refractive ach-romatic spectacle lenses. *Ophthal. Physiol. Opt.,* 1994, vol. 14, 389-392